# EUROPÄISCHE PATENTSCHRIFT

(11) **EP 3 755 189 B1**
(45) Veröffentlichungstag und Bekanntmachung des Hinweises auf die Patenterteilung: **12.06.2024**
(21) Anmeldenummer: 19707356.2
(22) Anmeldetag: 22.02.2019
(51) Int. Cl.: A47J 31/00, A47J 31/52, A47J 31/46

(54) **GETRÄNKEMASCHINENVORRICHTUNG**
BEVERAGE MACHINE DEVICE
SYSTÈME DE MACHINE À BOISSONS

(30) Priorität: 23.02.2018 DE 102018104196
(43) Veröffentlichungstag der Anmeldung: 30.12.2020
(73) Patentinhaber: Sysko AG, 7000 Chur (CH)
(72) Erfinder: HELBLING, Norbert, 8645 Jona (CH); WISSKIRCHEN, Michael, 88410 Bad Wurzach (DE); PARTZSCH, Fred, 88099 Neukirch (DE); WISSKIRCHEN, Florian, 88250 Weingarten (DE)
(74) Vertreter: Daub, Thomas
(86) Internationale Anmeldenummer: PCT/EP2019/054487
(87) Internationale Veröffentlichungsnummer: WO 2019/162466

(56) Entgegenhaltungen:
- EP-A1- 1 929 905
- EP-A1- 3 228 230
- EP-A1- 3 279 473
- EP-A1- 3 311 713
- EP-B1- 2 898 803
- DE-A1-102015 217 999
- DE-U1-202015 104 396

## Beschreibung

### Stand der Technik

Es ist bereits eine Getränkemaschine zur Bereitung eines Getränks bekannt. Zur Förderung einer Getränkeflüssigkeit, welche zur Bereitung des Getränks vorgesehen ist, weist die Getränkemaschine eine Getränkepumpe auf. Eine Leistungsfähigkeit der Getränkepumpe ist dabei gegeben durch eine Pumpenkennlinie, welche einen Zusammenhang zwischen einem erzeugten Druck und einem Durchfluss beschreibt. Zur Leitung der Getränkeflüssigkeit weist die Getränkemaschine ein Leitungssystem auf. Das Leitungssystem bildet eine Last, mit welcher die Getränkepumpe in einem Betrieb beaufschlagt ist. Die Last des Leitungssystems ist durch eine Lastkennlinie beschrieben. Ein Arbeitspunkt der Getränkepumpe ergibt sich dann aus dem Schnittpunkt der Pumpenkennlinie und der Lastkennlinie. Dabei ist der Arbeitspunkt in der Regel eindeutig durch einen jeweiligen Druck und einen Durchfluss definiert, wodurch sich beispielsweise der Druck nicht beliebig einstellen lässt, um insbesondere einen Arbeitspunkt einzuhalten, ohne dass auch der Durchfluss ebenfalls variiert werden muss. Gattungsgemäße Getränkemaschinen sind beispielsweise aus den Druckschriften DE 102015 217999 A1, DE 2020 15104396, sowie EP 2898803 B1 bekannt.

Die Aufgabe der Erfindung besteht insbesondere darin, eine gattungsgemäße Vorrichtung mit verbesserten Eigenschaften hinsichtlich einer Betreibbarkeit, insbesondere im Hinblick auf eine Flexibilität und/oder Effizienz, bereitzustellen. Die Aufgabe wird erfindungsgemäß durch die Merkmale des Patentanspruchs 1 und/oder des Patentanspruchs 18 gelöst, während vorteilhafte Ausgestaltungen und Weiterbildungen der Erfindung den Unteransprüchen entnommen werden können.

### Vorteile der Erfindung

Es wird eine Getränkemaschinenvorrichtung, insbesondere eine Kaffeemaschinenvorrichtung, vorgeschlagen, mit zumindest einer Getränkepumpe, vorzugsweise einer Schwingankerpumpe, welche zur Förderung einer Getränkeflüssigkeit vorgesehen ist, mit zumindest einer Regeleinheit, welche dazu vorgesehen ist, zumindest eine Strömungskenngröße der Getränkeflüssigkeit zumindest im Wesentlichen auf zumindest einen vorbestimmten Wert einzuregeln, und mit einer Steuereinheit, welche dazu vorgesehen ist, zur variablen Einstellung einer weiteren Strömungskenngröße der Getränkeflüssigkeit die Getränkepumpe, und zwar insbesondere unter Einhaltung eines Arbeitspunkts anzusteuern. Hierdurch kann vorteilhaft eine Betreibbarkeit, insbesondere im Hinblick auf eine Flexibilität und/oder eine Effizienz, verbessert werden. Insbesondere kann eine Flexibilität verbessert werden, da beispielsweise eine Menge eines Getränks und/oder eine Zubereitungsdauer von einem Bediener und/oder automatisch variabel auch während einer Bereitung des Getränks gewählt werden kann. Somit kann der Bediener beispielsweise eine Menge an Espresso nach seinen Wünschen frei einstellen und ist nicht durch eine Voreinstellung beschränkt. Weiter vorteilhaft können/kann bei der Zubereitung ein Druck, eine Kontaktzeit und/oder ein Durchfluss variiert werden, wodurch ein Brühvorgang, beispielsweise ein Gehalt und/oder Lösen von Aromastoffen, welche insbesondere abhängig von einer Kontaktzeit, einem Durchfluss und/oder druckabhängig gelöst werden, verbessert werden. Weiterhin kann insbesondere eine Effizienz verbessert werden, da die Strömungskenngröße an eine sich durch Ablagerungen im Leitungssystem verändernde Last angepasst werden kann, wodurch sich eine Standzeit bzw. ein Wartungsintervall verlängern lassen. Weiter vorteilhaft kann eine Energieeffizienz der Getränkemaschinenvorrichtung verbessert werden, da stets ein optimaler Arbeitspunkt für die Getränkepumpe einstellbar ist.

Unter einer "Getränkemaschinenvorrichtung" soll insbesondere ein Teil einer Getränkemaschine verstanden werden, welcher diese zumindest teilweise und vorzugsweise zumindest zu einem Großteil ausbildet. Alternativ kann die Getränkemaschinenvorrichtung die Getränkemaschine vollständig ausbilden. Unter dem Ausdruck "zumindest zu einem Großteil" sollen dabei insbesondere zumindest zu 55 %, vorzugsweise zumindest zu 65 %, bevorzugt zumindest zu 75 %, besonders bevorzugt zumindest zu 85 % und ganz besonders bevorzugt zumindest zu 95 % verstanden werden. Die Getränkemaschine ist insbesondere zum Bereiten von Getränken vorgesehen, wie vorzugsweise von Warm- und/oder Heißgetränken, wie beispielsweise Kaffee, Tee, Kakao, Brühe, Suppe oder dergleichen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Alternativ oder zusätzlich könnte die Getränkemaschine zu einem Bereiten von Kaltgetränken, wie beispielsweise Saft, Softdrinks oder dergleichen, vorgesehen sein. Auch könnte dieselbe Getränkemaschine zum Bereiten von verschiedenen Getränkearten vorgesehen sein, wie beispielsweise von Heiß- und Kaltgetränken. Unter dem Begriff "Bereiten" soll insbesondere Herstellen, Erzeugen, Zubereiten, und zwar vorzugsweise durch Brühen, Anmischen, Anrichten und/oder Servieren, verstanden werden. Die Getränkemaschine könnte insbesondere zum Bereiten von Getränken mit Hilfe von vorgefertigten Zubereitungsportionen, welche beispielsweise in Form von Kapseln und/oder Pads vorliegen, vorgesehen sein. Bevorzugt ist die Getränkemaschine als ein Getränkeautomat, insbesondere ein Kaffeeautomat, und besonders bevorzugt als ein Getränkevollautomat, insbesondere ein Kaffeevollautomat ausgebildet. Ganz besonders bevorzugt ist die Getränkemaschine zum Bereiten von verschiedenen Getränkevarianten vorgesehen. Unter einer "Getränkevariante" soll insbesondere eine bevorzugte Zubereitungsart eines Getränks verstanden werden, wie beispielsweise von Kaffee, Filterkaffee, Espresso, Mokka, Cappuccino, Latte Macchiato oder dergleichen. Unter einer "Getränkeflüssigkeit" soll insbesondere eine trinkbare Flüssigkeit verstanden werden, welche zum Bereiten eines Getränks vorgesehen ist und dann selbst Bestandteil des bereiteten Getränks ist, wie beispielsweise Wasser.

Die Getränkepumpe ist insbesondere zumindest teilweise, vorzugsweise zumindest zu einem Großteil und besonders bevorzugt vollständig lebensmittelecht ausgebildet. Vorzugsweise sind zumindest Bauteile der Getränkepumpe, wie beispielsweise eine Kompressionskammer, ein Pumpkolben oder dergleichen, welche mit der Getränkeflüssigkeit in Kontakt kommen, lebensmittelecht ausgebildet. Zur Förderung der Getränkeflüssigkeit könnte die Getränkemaschinenvorrichtung zumindest zwei, vorzugsweise zumindest drei und besonders bevorzugt mehrere Getränkepumpen aufweisen, welche insbesondere variabel zueinander in Reihe und/oder parallel schaltbar und derart ansteuerbar sein könnten. Durch Verwendung von mehr als einer Getränkepumpe könnte insbesondere bei Einhaltung eines Arbeitspunkts eine der Strömungskenngrößen auf einen zumindest im Wesentlichen vorbestimmten Wert eingeregelt werden, während die weitere Strömungskenngröße variabel einstellbar wäre. Unter "zumindest im Wesentlichen" soll insbesondere eine Berücksichtigung einer Abweichung von höchstens 15 %, vorzugsweise höchstens 10 %, bevorzugt höchstens 5 % und ganz besonders bevorzugt von höchstens 1 % von einem angegebenen Wert verstanden werden. Bevorzugt weist die Getränkemaschinevorrichtung jedoch nur eine, insbesondere eine einzige, Getränkepumpe auf. Die Getränkepumpe weist insbesondere zumindest eine Pumpenkennlinie auf. Unter einer "Pumpenkennlinie" soll insbesondere eine Kennlinie der Getränkepumpe verstanden werden, welche einen Zusammenhang zwischen einem von der Getränkepumpe erzeugten Wert der Getränkekenngröße und dem sich daraufhin an der Getränkepumpe einstellenden Wert der weiteren Strömungskenngröße beschreibt. Die Pumpenkennlinie gibt insbesondere ein Maß für eine Leistungsfähigkeit der Getränkepumpe an. Vorzugsweise ist die Pumpenkennlinie durch Variation einer Leistung, mit welcher die Getränkepumpe angesteuert wird, insbesondere mittels zumindest eines Leistungsparameters, variierbar. Eine unterhalb der Pumpenkennlinie eingeschlossene Fläche entspricht insbesondere einer Leistung der Getränkepumpe.

Die Getränkemaschinenvorrichtung weist insbesondere ein Leitungssystem auf. Unter einem "Leitungssystem" soll insbesondere ein System verstanden werden, welches zumindest ein die Getränkeflüssigkeit leitendes Bauteil umfasst. Vorzugsweise umfasst das Leitungssystem alle die Getränkeflüssigkeit leitenden Bauteile der Getränkemaschinenvorrichtung. Unter einem "leitenden Bauteil" soll insbesondere ein Bauteil verstanden werden, welches die Getränkeflüssigkeit passiv leitet, ohne diese aktiv zu fördern, wie dies im Gegensatz beispielsweise eine Getränkepumpe tut. Das Leitungssystem ist insbesondere frei von einer Getränkepumpe. Das Leitungssystem bildet insbesondere eine Last, mit welcher die Getränkepumpe in einem Betrieb beaufschlagt ist. Das Leitungssystem weist insbesondere zumindest eine Lastkennlinie auf. Unter einer "Lastkennlinie" soll insbesondere eine Kennlinie verstanden werden, welche einen Zusammenhang zwischen einem erzeugten Wert der Getränkekenngröße und dem sich daraufhin einstellenden Wert der weiteren Strömungskenngröße einer die Getränkepumpe in einem Betriebsvorgang belastenden Last beschreibt. Die Lastkennlinie gibt insbesondere einen einer Förderung durch die Getränkepumpe entgegenwirkenden Strömungswiderstand an, welcher sich vorzugsweise aus einer Steigung der Lastkennlinie ergibt. Die Lastkennlinie ist insbesondere variierbar durch eine Variation einer Ausgestaltung des Leitungssystems. Beispielsweise kann die Lastkennlinie durch Aktivieren und/oder Deaktivieren, wie beispielsweise durch Hinzu- und/oder Wegschalten, von Bauteilen des Leitungssystems, variiert werden. Ferner ist denkbar, dass die Lastkennlinie während einer Standzeit durch Zusetzen von flüssigkeitsleitenden Bauteilen variiert. Ferner kann die Lastkennlinie insbesondere durch eine Eigenschaft einer Zubereitungszutat, wie beispielsweise durch einen Mahlgrad von Kaffeemehl, beeinflusst sein. Insbesondere in einem Arbeitspunkt befinden sich die von der Getränkepumpe zur Verfügung gestellte Förderleistung und die von dem Leitungssystem erzeugte Last im Gleichgewicht. Insbesondere soll unter einem "Arbeitspunkt" ein Schnittpunkt der Pumpenkennlinie und der Lastkennlinie verstanden werden.

Unter einer "Strömungskenngröße" soll eine Kenngröße verstanden werden, welche ein Strömungsverhalten der Getränkeflüssigkeit innerhalb der Getränkemaschinenvorrichtung beschreibt. Die Strömungskenngröße ist insbesondere mit einem Druck, einem Durchfluss, insbesondere einem Volumenstrom und/oder Massenstrom, und/oder einer Durchströmungszeit, der Getränkeflüssigkeit korreliert und/oder mit diesem identisch. Die Strömungskenngröße und die weiteren Strömungskenngrößen sind insbesondere voneinander verschiedene physikalische Kenngrößen. Unter einem "vorbestimmten Wert der Strömungskenngröße" soll insbesondere ein Wert verstanden werden, welcher durch eine Ausgestaltung der Getränkemaschinenvorrichtung und/oder werkseitig festlegbar, insbesondere hinterlegt, ist und/oder aus einem vorbestimmten Wertebereich, insbesondere vor einer Getränkezubereitung, auswählbar ist. Insbesondere bestimmen/bestimmt eine Ausgestaltung und/oder Einstellung der Regeleinheit im Wesentlichen den vorbestimmten Wert.

Unter einer "Regeleinheit" soll insbesondere eine insbesondere zumindest teilweise, vorzugsweise zumindest zu einem Großteil und besonders bevorzugt vollständig, mechanische, hydrodynamische, elektrische und/oder elektronische Einheit zur Regelung der Strömungskenngröße verstanden werden. Vorzugsweise ist die Regeleinheit zumindest zu einem Großteil und besonders bevorzugt vollständig mechanisch und/oder hydrodynamisch ausgebildet und insbesondere höchstens zu einem Bruchteil elektrisch und/oder elektronisch. Unter einem "Bruchteil" soll insbesondere ein Teil verstanden werden, welcher kleiner als 50 %, vorzugsweise kleiner als 25 % und besonders bevorzugt kleiner als 5 % ist. Ist die Regeleinheit zumindest teilweise elektrisch und/oder elektronisch ausgebildet, umfasst diese insbesondere zumindest eine Regelelektronik.

Unter einer "Regelelektronik" soll insbesondere eine Einheit mit einer Recheneinheit und mit einer Speichereinheit sowie mit einem in der Speichereinheit gespeicherten Regelprogramm, welches insbesondere dazu vorgesehen ist, von der Recheneinheit ausgeführt zu werden, verstanden werden. Besonders bevorzugt ist die Regeleinheit frei von einer Elektrik und/oder Elektronik. Ferner umfasst die Regeleinheit zur Regelung insbesondere eine Rückkopplung, welche einen aktuellen Wert der Strömungskenngröße bestimmt, welcher einem Ausgangskennwert der Regeleinheit selbst entspricht und diesen der Regeleinheit wiederum als Eingangskennwert zur Regelung zur Verfügung stellt. Die Rückkopplung kann insbesondere zumindest teilweise, vorzugsweise zumindest zu einem Großteil und besonders bevorzugt vollständig mechanisch, hydrodynamisch, elektrisch und/oder elektronisch ausgebildet sein. Besonders bevorzugt ist die Rückkopplung frei von einer Elektrik und/oder Elektronik. Vorzugsweise ist die Rückkopplung von einem Regelkanal ausgebildet, welcher hydrodynamisch einen Wert der Strömungskenngröße detektiert und die Regeleinheit mit diesem beaufschlagt. Alternativ oder zusätzlich ist denkbar, dass die Getränkemaschinenvorrichtung zumindest eine weitere Regeleinheit umfasst, welche dazu vorgesehen ist, die weitere Strömungskenngröße zu regeln. Demnach könnte beispielsweise zwischen einem Regeln der Strömungskenngröße oder der weiteren Strömungskenngröße je nach Betrieb der jeweiligen Regeleinheit ausgewählt werden. Besonders bevorzugt weist die Getränkemaschinenvorrichtung lediglich eine, insbesondere eine einzige Regeleinheit auf. Die Regeleinheit ist von einem Bediener und/oder automatisch einstellbar. Insbesondere ist die Strömungskenngröße von einem Bediener und/oder automatisch an der Regeleinheit einstellbar. Beispielsweise kann die Regeleinheit dazu zumindest eine Einstelleinheit aufweisen, wie beispielsweise eine Stellschraube, ein Touchdisplay oder dergleichen. Insbesondere ist die Regeleinheit ein Bauteil des Leitungssystems. Besonders bevorzugt kann die Regeleinheit, insbesondere von einem Benutzer aktivierbar und/oder deaktivierbar sein. Die Regeleinheit ist insbesondere in einem aktiven Zustand zu einer Beeinflussung der Lastkennlinie vorgesehen. Ferner ist die Regeleinheit in einem deaktivierten Zustand dazu vorgesehen, die Lastkennlinie nicht wesentlich zu beeinflussen.

Unter einer "Steuereinheit" soll insbesondere eine zumindest teilweise, vorzugsweise zumindest zu einem Großteil und besonders bevorzugt vollständig, elektrische und/oder elektronische Einheit mit zumindest einer Steuerelektronik verstanden werden. Die Steuereinheit ist zur Steuerung der Getränkepumpe insbesondere mit dieser elektronisch verbunden. Unter einer "Steuerelektronik" soll insbesondere eine Einheit mit einer Recheneinheit und mit einer Speichereinheit sowie mit einem in der Speichereinheit gespeicherten Steuerprogramm, welches insbesondere dazu vorgesehen ist, von der Recheneinheit ausgeführt zu werden, verstanden werden. Vorzugsweise ist die Steuereinheit zur Steuerung vorgesehen. Vorzugsweise ist die Steuereinheit zur Ansteuerung der Getränkepumpe vorgesehen. Besonders bevorzugt ist die Steuereinheit zur direkten Ansteuerung der Getränkepumpe vorgesehen. Die Steuereinheit weist insbesondere zumindest eine, vorzugsweise direkte, Steuerleitung zu der Getränkepumpe auf. Die Steuereinheit ist insbesondere nicht zur Regelung der Getränkepumpe vorgesehen. Die Steuereinheit ist insbesondere nicht zur Regelung der Regeleinheit vorgesehen. Die Steuereinheit ist insbesondere von einem Bediener und/oder automatisch einstellbar. Insbesondere ist zumindest eine Strömungskenngröße, insbesondere die zuvor genannte weitere Strömungskenngröße, vorzugsweise zur Variation von einem Bediener und/oder automatisch an der Steuereinheit einstellbar. Beispielsweise kann die Steuereinheit dazu zumindest ein Bedienelement, wie beispielsweise ein Touchdisplay, umfassen. Die Steuereinheit ist insbesondere dazu vorgesehen, zumindest eine Strömungskenngröße, insbesondere die zuvor genannte weitere Strömungskenngröße, zu steuern.

Für den Fall, dass die Regeleinheit zumindest teilweise, vorzugsweise zumindest zu einem Großteil und besonders bevorzugt vollständig elektrisch und/oder elektronisch ausgebildet ist, ist denkbar, dass die Regeleinheit und die Steuereinheit zumindest teilweise, vorzugsweise zumindest zu einem Großteil und besonders bevorzugt vollständig einstückig ausgebildet sind und insbesondere ein und dieselbe Einheit ausbilden. Unter "zumindest teilweise einstückig ausgebildet" soll in diesem Zusammenhang insbesondere verstanden werden, dass ein Objekt zumindest ein Bauteil aufweist, welches einstückig mit zumindest einem weiteren Bauteil des Objekts verbunden ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Besonders bevorzugt sind die Regeleinheit und die Steuereinheit voneinander getrennt ausgebildete Einheiten.

Insbesondere kann die Getränkemaschinenvorrichtung zumindest eine Sensoreinheit umfassen. Die Sensoreinheit kann zumindest teilweise, vorzugsweise zumindest zu einem Großteil und besonders bevorzugt vollständig die Rückkopplung der Regeleinheit ausbilden. Unter einer "Sensoreinheit" soll insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen, stattfinden kann. Insbesondere kann die Getränkemaschinenvorrichtung mehrere Sensoreinheiten umfassen. Vorzugsweise umfasst die Getränkemaschinenvorrichtung zumindest eine Sensoreinheit zur Sensierung der Strömungskenngröße. Vorzugsweise umfasst die Getränkemaschinenvorrichtung zumindest eine weitere Sensoreinheit zur Sensierung der weiteren Strömungskenngröße. Die Sensoreinheit ist insbesondere als ein Durchflussmessgerät und/oder ein Druckmessgerät ausgebildet. Vorzugsweise bildet die Sensoreinheit zumindest teilweise die Rückkopplung der Regeleinheit aus.

Zum Ansteuern und Einstellen der weiteren Strömungskenngröße verwendet die Steuereinheit die leistungsabhängige Pumpenkennlinie der Getränkepumpe. Die Steuereinheit ist zur Ansteuerung der Getränkepumpe dazu vorgesehen, zumindest eine Leistungskenngröße der Getränkepumpe zu variieren. Insbesondere ist eine von der Pumpenkennlinie eingeschlossene Fläche proportional zu einem Wert der Leistungskenngröße. Unter einer "Leistungskenngröße" soll insbesondere eine Kenngröße verstanden werden, welche eine Förderleistung der Getränkepumpe beschreibt. Vorteilhaft ist die Leistungskenngröße mit der Förderleistung, einer elektrischen Leistung, einem Strom, einer Spannung, insbesondere einem Anteil von Strom und/oder Spannung, welcher der Getränkepumpe anliegt, korreliert und/oder identisch. Die der jeweiligen Leistungskenngröße zuzuordnende Pumpenkennlinie ist insbesondere in der Steuereinheit hinterlegt. Insbesondere ist die Leistungskenngröße von einem Bediener und/oder automatisch einstellbar, um einen bevorzugten Wert der weiteren Strömungskenngröße einzustellen.

Es wird ferner vorgeschlagen, dass die Regeleinheit dazu vorgesehen ist, die Strömungskenngröße wenigstens bereichsweise auf einen zumindest im Wesentlichen konstanten Wert einzuregeln. Besonders bevorzugt ist die Steuereinheit dazu vorgesehen, die weitere Strömungskenngröße wenigstens bereichsweise unabhängig von der Strömungskenngröße einzustellen. Hierdurch kann vorteilhaft eine Flexibilität weiter verbessert werden, da ein variabler Wert der weiteren Strömungskenngröße aus einer Bandbreite von Werten innerhalb eines Wertebereichs, in welchem der Wert der Strömungskenngröße auf einen zumindest im Wesentlichen konstanten Wert geregelt ist, ausgewählt werden kann. Unter "bereichsweise" soll insbesondere in diesem Zusammenhang das Vorhandensein eines bestimmten Wertebereichs der weiteren Strömungskenngröße, vorzugsweise der Lastkennlinie, verstanden werden, innerhalb welchem die Strömungskenngröße auf den vorbestimmten, insbesondere zumindest im Wesentlichen konstanten Wert einregelbar ist. Der Wertebereich ist insbesondere dadurch definiert, dass die Steigung der Lastkennlinie, insbesondere bei aktiver Regeleinheit, in diesem Wertebereich zumindest im Wesentlichen konstant ist. Vorzugsweise ist der Wert der Steigung der Lastkennlinie in dem Wertebereich zumindest im Wesentlichen Null oder zumindest im Wesentlichen unendlich. Unter "zumindest im Wesentlichen unendlich" soll in diesem Zusammenhang insbesondere ein Wert verstanden werden, welcher zumindest um einen Faktor 100, vorzugsweise zumindest um einen Faktor 1000 und besonders bevorzugt zumindest um einen Faktor 10000 größer als ein durchschnittlicher Wert ist. Unter "zumindest im Wesentlichen Null" soll in diesem Zusammenhang insbesondere ein Wert verstanden werden, welcher zumindest um einen Faktor 100, vorzugsweise zumindest um einen Faktor 1000 und besonders bevorzugt zumindest um einen Faktor 10000 kleiner als ein durchschnittlicher Wert ist.

Es wird des Weiteren vorgeschlagen, dass die Regeleinheit dazu vorgesehen ist, bei Einstellung des variablen Werts der weiteren Strömungskenngröße durch die Steuereinheit wenigstens bereichsweise den Wert der Strömungskenngröße, welcher von der Regeleinheit einregelbar ist, vorzubestimmen. Hierdurch kann insbesondere eine Flexibilität eines Brühvorgangs und/oder einer Extraktion weiter verbessert werden. Insbesondere kann vorteilhaft ein Brühvorgang erzielt werden, bei welchem auch bei Steigerung eines Durchflusses ein Druck der Extraktion gezielt variiert, insbesondere verringert, werden kann. Insbesondere im vorliegenden Fall ist der vorbestimmte Wert der Strömungskenngröße wenigstens bereichsweise von der weiteren Strömungskenngröße abhängig. Unter "bereichsweise" soll insbesondere in diesem Zusammenhang das Vorhandensein eines bestimmten Wertebereichs der weiteren Strömungskenngröße, vorzugsweise der Lastkennlinie, verstanden werden, innerhalb welchem die weitere Strömungskenngröße den Wert der Strömungskenngröße vorbestimmt. Der Wertebereich ist insbesondere dadurch definiert, dass die Steigung der Lastkennlinie, insbesondere bei aktiver Regeleinheit, in diesem Wertebereich zumindest im Wesentlichen konstant ist. Vorzugsweise verläuft die Lastkennlinie in dem Wertebereich zumindest im Wesentlichen linear. Weiter bevorzugt weist die Lastkennlinie an den Rändern des Wertebereichs zumindest einen Umkehrpunkt auf. Besonders bevorzugt weist die Lastkennlinie in dem Wertebereich eine negative Steigung auf. Unter einer "negativen Steigung der Lastkennlinie" soll insbesondere eine Steigung verstanden werden, welche bei Anstieg der weiteren Strömungskenngröße eine Abnahme der Strömungskenngröße zur Folge hat.

Es wird ferner vorgeschlagen, dass die Steuereinheit zur Ansteuerung der Getränkepumpe eine Phasenanschnittsteuerung vorsieht. Insbesondere wird bei der Phasenanschnittsteuerung als zumindest eine Leistungskenngröße zur Ansteuerung der Getränkepumpe ein Anteil einer Halbwelle eines Stroms und/oder einer Spannung, welche an der Getränkepumpe anliegt, variiert. Hierdurch kann vorteilhaft eine flexible Ansteuerung bereitgestellt werden, welche einen reduzierten Leistungsverlust umfasst. Ferner kann ein besonders einfacher Aufbau erzielt werden, welcher gleichzeitig weniger störanfällig ist. Vorzugsweise sieht die Steuereinheit eine Ansteuerung mittels einer Variation eines Werts der Leistungskenngröße von einem Minimalwert von 0° bis zu einem Maximalwert von 90° vor. Vorzugsweise kann die Steuereinheit die Leistungskenngröße schrittweise variieren, und zwar insbesondere mit einer Schrittweite, welche höchstens einem Fünftel, vorzugsweise höchstens einem Zehntel und besonders bevorzugt höchstens einem Neunzigstel des Maximalwerts entspricht. Ganz besonders bevorzugt ist der Wert des Leistungskenngröße im Wesentlichen kontinuierlich variierbar. Alternativ oder zusätzlich sind weitere Ansteuerungen der Getränkepumpe, insbesondere mittels weiterer Leistungskenngrößen, denkbar, wie beispielsweise einer Pulsweitenmodulation, einer Phasenabschnittssteuerung, einer Amplitudenanpassung und/oder einer Frequenzanpassung.

Es wird ferner vorgeschlagen, dass zumindest eine der Strömungskenngrößen, insbesondere die zuvor bereits erwähnte weitere Strömungskenngröße, einem Druck der Getränkeflüssigkeit entspricht. Besonders bevorzugt entspricht zumindest eine der Strömungskenngrößen, insbesondere die zuvor bereits erwähnte Strömungskenngröße, einem Druck der Getränkeflüssigkeit. Demnach wird im vorliegenden Fall der Druck der Getränkeflüssigkeit auf einen vorbestimmten Wert, insbesondere einen bereichsweise zumindest im Wesentlichen konstanten Wert, eingeregelt, während der Durchfluss variierbar ist. Ferner ist der umgekehrte Fall denkbar, wobei eine Strömungskenngröße, insbesondere die zuvor bereits erwähnte Strömungskenngröße, einem Durchfluss der Getränkeflüssigkeit entspricht. Besonders bevorzugt entspricht zumindest eine der Strömungskenngrößen, insbesondere die zuvor bereits erwähnte weitere Strömungskenngröße, einem Druck der Getränkeflüssigkeit. Hierdurch kann vorteilhaft eine Flexibilität in Bezug auf eine Variation eines Brühdrucks verbessert werden. Demnach wird im vorliegenden Fall der Durchfluss der Getränkeflüssigkeit auf einen vorbestimmten Wert, insbesondere einen bereichsweise zumindest im Wesentlichen konstanten Wert, eingeregelt, während der Druck der Getränkeflüssigkeit variierbar ist.

Es wird ferner vorgeschlagen, dass die Steuereinheit und die Regeleinheit dazu vorgesehen sind, die Regelung der Strömungskenngröße und/oder die Ansteuerung der Getränkepumpe zur variablen Einstellung der weiteren Strömungskenngröße abhängig von einer zu bereitenden Getränkevariante durchzuführen. Hierdurch kann beispielsweise im Falle einer Auswahl einer Getränkevariante von Espresso ein für die Bereitung der Getränkevariante charakteristischer Wert der Strömungskenngröße eingeregelt werden, wie beispielsweise der Getränkeflüssigkeitsdruck, während der weitere Getränkeflüssigkeitskennwert, wie beispielsweise der Getränkeflüssigkeitsfluss, variiert werden kann, wodurch z.B. eine Abgabezeit und/oder eine Menge der jeweiligen Getränkevariante einstellbar ist. Insbesondere kann eine Kontaktzeit variiert werden, um eine Extraktion zu verbessern. Insbesondere ist denkbar, dass die Auswahl, welche der Strömungskenngrößen geregelt und welche der Strömungskenngrößen variabel ist, abhängig von einer Getränkevariante getroffen wird. Ferner ist denkbar, dass sich ein Widerstand verschiedener Zubereitungsportionen der Getränkevarianten unterscheidet, wodurch sich auch ein Verlauf der Lastkennlinie verändert, so dass der Arbeitspunkt durch Variation der weiteren Strömungskennlinie angepasst werden muss. Beispielsweise kann eine Menge an Kaffeepulver und/oder ein Mahlgrad des Kaffeepulvers den Widerstand und somit die Lastkennlinie beeinflussen und vorteilhaft eine Variation erforderlich machen

Es wird ferner vorgeschlagen, dass die Steuereinheit dazu vorgesehen ist, während eines Getränkezubereitungsvorgangs die weitere Strömungskenngröße zu variieren. Hierdurch kann vorteilhaft eine Flexibilität weiter verbessert werden. Insbesondere kann automatisch und/oder durch einen Bediener während eines Getränkezubereitungsvorgangs die Zubereitung eines Getränks derart variiert werden, wobei beispielsweise durch Erhöhung der weiteren Strömungskenngröße eine größere Menge des Getränks und/oder die gleiche Menge in einer kürzeren Zeit erhalten werden kann. Insbesondere kann die weitere Strömungskenngröße während einer Getränkezubereitung von einem Bediener und/oder automatisch variiert werden, insbesondere mittels Betätigung des Bedienelements der Steuereinheit.

Es wird ferner vorgeschlagen, dass die Regeleinheit in zumindest einem Betriebszustand zumindest teilweise, vorzugsweise zumindest zu einem Großteil und besonders bevorzugt vollständig, von der Getränkeflüssigkeit durchflossen ist. Hierdurch kann eine Effizienz weiter verbessert werden. Vorzugsweise kann auf eine aktive und/oder elektrische Regelung sowie eine elektrische Sensorik verzichtet werden. Insbesondere für diesen Fall ist die Regeleinheit vorteilhaft als eine mechanische und/oder hydrodynamische Regeleinheit ausgebildet.

Es wird ferner vorgeschlagen, dass die Regeleinheit zur Festlegung zumindest eines Wertebereichs, in welchem die Strömungskenngröße zumindest im Wesentlichen konstant ist, einstellbar ist. Hierdurch kann eine besonders flexible Zubereitung erzielt werden. Die Regeleinheit ist insbesondere von einem Bediener und/oder automatisch einstellbar. Dazu weist die Regeleinheit insbesondere eine Einstelleinheit auf, welche beispielsweise als eine Stellschraube ausgebildet ist. Insbesondere kann der vorbestimmte Wert, insbesondere für den Fall, dass die Strömungskenngröße mit dem Druck korreliert und/oder identisch ist, aus einem Wertebereich, welcher sich von wenigstens 0,5 bar, vorzugsweise wenigstens 1 bar, besonders bevorzugt wenigstens 5 bar und ganz besonders bevorzugt wenigstens 10 bar bis höchstens 25 bar, vorzugsweise höchstens 20 bar, besonders bevorzugt höchstens 15 bar und ganz besonders bevorzugt höchstens 10 bar erstreckt, ausgewählt und insbesondere zumindest im Wesentlichen konstant geregelt werden. Dabei kann die weitere Kenngröße in einem weiteren Wertebereich, welcher sich von wenigstens 5 ml/min, vorzugsweise wenigstens 10 ml/min, besonders bevorzugt wenigstens 15 ml/min und ganz besonders bevorzugt wenigstens 20 ml/min bis höchstens 1000 ml/min, vorzugsweise höchstens 800 ml/min, besonders bevorzugt bis höchstens 600 ml/min und ganz besonders bevorzugt höchstens 500 ml/min erstreckt, variiert werden. Ferner ist der umgekehrte Fall denkbar, wonach der vorbestimmte Wert, insbesondere für den Fall, dass die Strömungskenngröße mit dem Durchfluss korreliert und/oder identisch ist, aus einem Wertebereich, welcher sich von wenigstens 5 ml/min, vorzugsweise wenigstens 10 ml/min und besonders bevorzugt wenigstens 20 ml/min bis höchstens 700 ml/min, vorzugsweise höchstens 600 ml/min und besonders bevorzugt bis höchstens 500 ml/min erstreckt, ausgewählt und insbesondere zumindest im Wesentlichen konstant geregelt werden. Dabei kann die weitere Kenngröße in einem weiteren Wertebereich, welcher sich von wenigstens 5 ml/min, vorzugsweise wenigstens 10 ml/min und besonders bevorzugt wenigstens 20 ml/min bis höchstens 700 ml/min, vorzugsweise höchstens 600 ml/min und besonders bevorzugt bis höchstens 500 ml/min erstreckt, variiert werden.

Insbesondere für den Fall, dass der Strömungskennwert, welcher eingeregelt ist, mit dem Druck korreliert und/oder identisch ist, wird vorgeschlagen, dass die Regeleinheit zumindest teilweise, vorzugsweise zumindest zu einem Großteil und besonders bevorzugt vollständig zumindest einen Druckregler ausbildet. Ferner ist demnach die Sensoreinheit vorzugsweise als ein Druckmessgerät ausgebildet. Alternativ oder zusätzlich wird insbesondere für den Fall, dass der Strömungskennwert, welcher eingeregelt ist, mit dem Durchfluss korreliert und/oder identisch ist, vorgeschlagen, dass die Regeleinheit zumindest teilweise, vorzugsweise zumindest zu einem Großteil und besonders bevorzugt vollständig einen Durchflussregler ausbildet. Ferner ist demnach die Sensoreinheit vorzugsweise als ein Durchflussmessgerät ausgebildet.

Es wird ferner vorgeschlagen, dass die Getränkemaschinenvorrichtung zumindest eine Zubereitungseinheit umfasst, welche fluidtechnisch zumindest teilweise, vorzugsweise zumindest zu einem Großteil und besonders bevorzugt vollständig, zwischen der Getränkepumpe und der Regeleinheit angeordnet ist. Hierdurch können ein besonders vorteilhaftes Strömungsverhalten sowie insbesondere eine vorteilhafte Regelung und/oder Ansteuerung der Strömungskenngrößen erzielt werden. Die Zubereitungseinheit ist insbesondere Teil des Leitungssystems. Die Zubereitungseinheit weist insbesondere eine Temperiereinheit auf. Die Temperiereinheit ist zum Temperieren der Getränkeflüssigkeit und/oder einer Getränkezutat vorgesehen. Vorzugsweise ist die Temperiereinheit als eine Heizeinheit ausgebildet. Insbesondere weist die Temperiereinheit zumindest ein Heizelement auf, welches vorzugsweise als ein Heizdraht ausgebildet ist. Alternativ oder zusätzlich könnte die Temperiereinheit ein Kühlelement aufweisen. Die Zubereitungseinheit weist ferner insbesondere eine Brüheinheit auf. Die Brüheinheit weist eine Getränkezutatenaufnahme auf, wie beispielsweise für Kaffeepulver. Ferner ist die Getränkezutatenaufnahme insbesondere dazu vorgesehen, bei einer Förderung der Getränkeflüssigkeit von dieser durchflossen zu werden.

Des Weiteren wird vorgeschlagen, dass der weiteren Strömungskenngröße zumindest eine bestimmte Strömungskenngröße zugeordnet ist, wobei die Strömungskenngröße über die Steuereinheit, insbesondere über einen Phasenanschnitt, einstellbar ist. Der Phasenanschnitt erfolgt vorzugsweise mittels der Phasenanschnittsteuerung. Vorzugsweise ist einem Durchfluss zumindest ein Druck zugeordnet, wobei der zumindest eine Druck über den Phasenanschnitt einstellbar ist. Durch diese Ausgestaltung kann vorteilhaft eine flexible Ansteuerung bereitgestellt werden. Ferner kann ein besonders einfacher Aufbau erzielt werden, welcher gleichzeitig weniger störanfällig ist.

Zudem wird vorgeschlagen, dass der zumindest im Wesentlichen konstante Wert der Strömungskenngröße einer Getränkevariante größer als ein zumindest im Wesentlichen konstanter Wert einer Strömungskenngröße einer weiteren Getränkevariante ist, wobei ein Wert der weiteren Strömungskenngröße der Getränkevariante kleiner als ein Wert der weiteren Strömungskenngröße der weiteren Getränkevariante ist. Vorzugsweise ist ein zumindest im Wesentlichen konstanter Wert des Drucks der Getränkevariante, insbesondere eines Espressos, größer als ein zumindest im Wesentlichen konstanter Wert des Drucks der weiteren Getränkevariante, insbesondere eines Kaffee Crema, wobei ein Wert des Durchflusses der Getränkevariante, insbesondere des Espressos, kleiner als ein Wert des Durchflusses der weiteren Getränkevariante, insbesondere des Kaffee Crema, ist. Durch diese Ausgestaltung kann der Benutzer vorteilhaft auf einfache Art zumindest zwei Getränkevarianten mittels einer einzigen Regeleinheit herstellen, insbesondere einen Espresso mit einem niedrigen Durchfluss und einem hohen Druck oder einen Kaffee Crema mit einem niedrigen Druck und einem hohen Durchfluss.

Ferner wird vorgeschlagen, dass die Regeleinheit ein Federelement, zumindest ein weiteres Federelement und zumindest ein Entlastungselement aufweist, wobei das zumindest eine Entlastungselement verschiebbar zwischen dem Federelement und dem zumindest einen weiteren Federelement angeordnet ist. Unter einem "Entlastungselement" soll dabei insbesondere ein Element verstanden werden, das durch eine Verschiebung dazu vorgesehen ist, eine Kompression des Federelements zu variieren. Das zumindest eine Entlastungselement ist in zumindest einem Betriebszustand dazu vorgesehen, das Federelement zu entlasten. Dabei soll unter "entlasten" insbesondere verstanden werden, dass eine Federkraft des Federelements, insbesondere eine Vorspannung des Federelements, verringert wird. Vorzugsweise ist durch eine Verschiebung des zumindest einen Entlastungselements die wirkende Federkraft des Federelements veränderbar. Vorzugsweise ist das Federelement als eine Druckfeder ausgebildet. Das zumindest eine weitere Federelement ist vorzugsweise als eine Druckfeder ausgebildet. Unter "verschiebbar" soll in diesem Zusammenhang insbesondere zumindest im Wesentlichen parallel zu einer Kompressionsrichtung des Federelements verschiebbar verstanden werden. Das zumindest eine Entlastungselement weist insbesondere zumindest einen Durchlass auf. Mittels dem zumindest einen Durchlass ist die Getränkeflüssigkeit durch das zumindest eine Entlastungselement förderbar. Vorzugsweise ist der zumindest eine Durchlass dazu vorgesehen, die Strömungskenngröße zu regulieren. Insbesondere ist der Durchlass dazu vorgesehen, den Durchfluss zu regulieren. Das zumindest eine Entlastungselement ist in zumindest einem Betriebszustand dazu vorgesehen, durch einen Druck, insbesondere einen auf eine Oberfläche des zumindest einen Entlastungselements wirkenden Staudruck, entgegen einer Federkraft des zumindest einen weiteren Federelements verschoben zu werden. Durch diese Ausgestaltung kann vorteilhaft sowohl ein geringer als auch ein hoher Druck, insbesondere Brühdruck, durch die Regeleinheit bereitgestellt werden. Grundsätzlich wäre auch denkbar, dass das zumindest eine weitere Federelement als eine Zugfeder ausgebildet ist, welches das Federelement umgibt, wobei das Federelement und das zumindest eine weitere Federelement auf einer Seite des zumindest einen Entlastungselements mit dem zumindest einen Entlastungselement verbunden sind. Durch diese Ausgestaltung kann vorteilhaft eine Regeleinheit bereitgestellt werden, bei der eine Vorspannkraft des Federelements abhängig von der Strömungskenngröße und der weiteren Strömungskenngröße ist. Dadurch kann ein Druck mittels der Regeleinheit vorteilhaft in Abhängigkeit von einem Durchfluss geregelt werden. In einem weiteren Aspekt der Erfindung wird ein Verfahren zum Betrieb der Getränkemaschinenvorrichtung vorgeschlagen, in welchem die Getränkeflüssigkeit mittels der Pumpe, insbesondere der Schwingankerpumpe, gefördert wird, wobei zumindest die Strömungskenngröße auf den vorbestimmten Wert eingeregelt wird und zur variablen Einstellung einer weiteren Strömungskenngröße eine Getränkepumpe ansteuert. Hierdurch kann vorteilhaft eine Betreibbarkeit, insbesondere im Hinblick auf eine Flexibilität und/oder eine Effizienz, verbessert werden.

Die hierin beschriebene Vorrichtung und/oder das Verfahren sollen hierbei nicht auf die oben beschriebene Anwendung und Ausführungsform beschränkt sein. Insbesondere kann die Vorrichtung und/oder das Verfahren zu einer Erfüllung einer hierin beschriebenen Funktionsweise eine von einer hierin genannten Anzahl von einzelnen Verfahrensschritten, Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Getränkemaschine mit einer Getränkemaschinenvorrichtung in einer perspektivischen Ansicht,
- Fig. 2: eine schematische Darstellung eines Teils der Getränkemaschinenvorrichtung mit einer Steuereinheit und einer Regeleinheit,
- Fig. 3: ein schematisches Diagramm zur Regelung und/oder Ansteuerung der Getränkemaschinenvorrichtung,
- Fig. 4: ein weiteres schematisches Diagramm zur Regelung und/oder Ansteuerung der Getränkemaschinenvorrichtung,
- Fig. 5: einen schematischen Ablaufplan eines Verfahrens zum Betrieb der Getränkemaschinenvorrichtung,
- Fig. 6: eine schematische Darstellung einer alternativen Ausgestaltung einer Getränkemaschinenvorrichtung,
- Fig. 7: eine schematische Darstellung einer alternativen Ausgestaltung einer Getränkemaschinenvorrichtung,
- Fig. 8: ein schematisches Diagramm zur Regelung und/oder Ansteuerung der alternativen Ausgestaltung der Getränkemaschinenvorrichtung aus Figur 7,
- Fig. 9: eine Schnittdarstellung einer alternativen Ausgestaltung einer Regeleinheit einer Getränkemaschinenvorrichtung und
- Fig. 10: ein schematisches Diagramm mit Verläufen zweier Strömungskenngrößen und zweier entsprechenden weiteren Strömungskenngrößen der alternativen Ausgestaltung der Getränkemaschinenvorrichtung aus Figur 9.

### Beschreibung der Ausführungsbeispiele

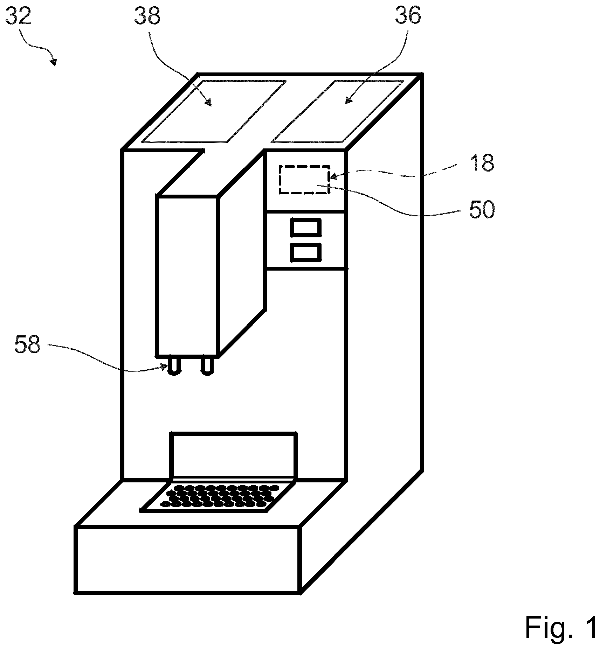

Die Figur 1 zeigt eine Getränkemaschine 32 mit einer Getränkemaschinenvorrichtung. Die Getränkemaschine 32 ist im vorliegenden Fall zur Bereitung von Warm- und/oder Heißgetränken vorgesehen. Die Getränkemaschine 32 ist als eine Kaffeemaschine ausgebildet. Ferner ist im vorliegenden Fall die Getränkemaschine 32 als ein Kaffeevollautomat ausgebildet. Alternativ oder zusätzlich könnte die Getränkemaschine 32 zur Bereitung weiterer Getränke, insbesondere weiterer Heißgetränke, vorgesehen sein, wie beispielsweise Kakao oder Tee. Zudem sind Ausgestaltungen der Getränkemaschine 32 denkbar, bei welcher diese Kaltgetränke bereitet, wie beispielsweise Saft oder einen Softdrink. Denkbar ist, dass die Kaffeemaschine auch als eine Portionskaffeemaschine ausgebildet sein könnte. Die Getränkemaschinenvorrichtung bildet im vorliegenden Fall die Getränkemaschine 32 vollständig aus. Demnach handelt es sich bei der vorliegenden Getränkemaschinenvorrichtung auch um eine Kaffeemaschinenvorrichtung. Alternativ könnte die Getränkemaschinenvorrichtung auch nur ein Teil einer Getränkemaschine sein.

Die Getränkemaschinenvorrichtung weist zumindest einen Zutatenspeicher 36 auf. Der Zutatenspeicher 36 ist zur Bereitstellung zumindest einer Getränkezutat für ein Getränk vorgesehen. Im vorliegenden Fall ist der Zutatenspeicher 36 zur Bereitstellung von Kaffeebohnen und/oder Kaffeepulver vorgesehen. Der Zutatenspeicher 36 ist im vorliegenden Fall als ein Vorratsbehälter ausgebildet. Ferner weist die Getränkemaschinenvorrichtung eine Mühle (nicht dargestellt) auf, welche zur Verarbeitung der Getränkezutat vorgesehen ist. Vorteilhaft ist ein Mahlgrad der Mühle einstellbar. Mittels der Mühle sind Kaffeebohnen zu Kaffeepulver weiter verarbeitbar.

Zur Bereitung von Getränken sieht die Getränkemaschinenvorrichtung die Verwendung einer Getränkeflüssigkeit 12 vor. Im vorliegenden Fall handelt es sich bei der Getränkeflüssigkeit 12 um Wasser. Strömt die Getränkeflüssigkeit 12 durch die Getränkemaschinenvorrichtung, kann diese anhand von Strömungskenngrößen physikalisch beschrieben werden, und zwar insbesondere mittels einer Strömungskenngröße und einer weiteren Strömungskenngröße. Im vorliegenden Fall entspricht die Strömungskenngröße einem Druck der Getränkeflüssigkeit 12. Ferner entspricht im vorliegenden Fall die weitere Strömungskenngröße einem Durchfluss der Getränkeflüssigkeit 12.

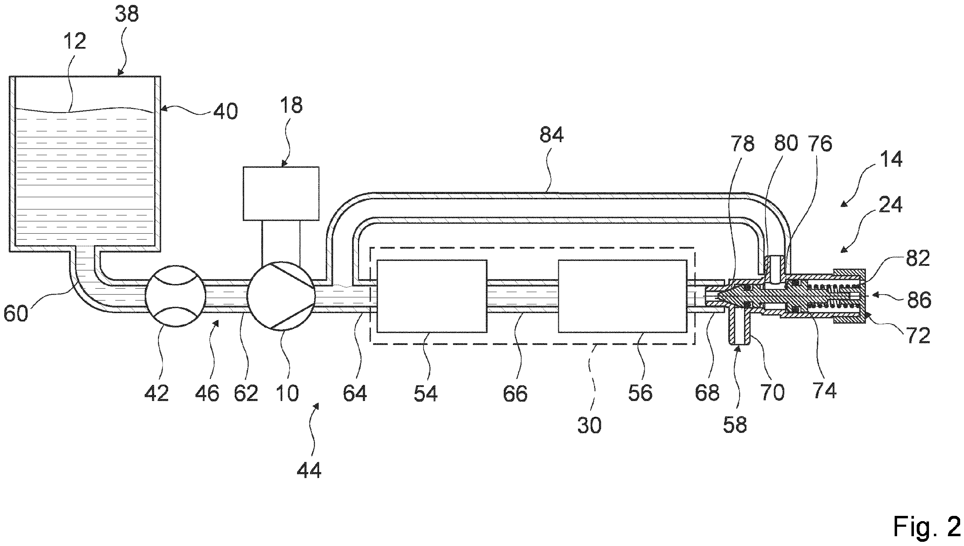

Zur Bereitstellung einer Getränkeflüssigkeit 12 weist die Getränkemaschinenvorrichtung einen Getränkeflüssigkeitsspeicher 38 auf. Der Getränkeflüssigkeitsspeicher 38 umfasst einen Getränkeflüssigkeitstank 40. Der Getränkeflüssigkeitstank 40 ist mit der Getränkeflüssigkeit 12 befüllbar (vgl. Figur 2). Beispielsweise kann der Getränkeflüssigkeitstank 40 von einem Bediener manuell befüllt werden. Ferner umfasst der Getränkeflüssigkeitsspeicher 38 einen Getränkeflüssigkeitsanschluss (nicht dargestellt). Der Getränkeflüssigkeitsanschluss ist mit dem Getränkeflüssigkeitstank 40 fluidtechnisch verbunden. Der Getränkeflüssigkeitsanschluss ist mit einer Getränkeflüssigkeitsversorgung, wie beispielsweise einem Wasserhahn, verbindbar. Derart kann der Getränkeflüssigkeitstank 40 vorteilhaft automatisch über den Getränkeflüssigkeitsanschluss befüllt werden.

In Figur 2 ist eine schematische Darstellung eines Teils der Getränkemaschinenvorrichtung gezeigt. Die Getränkemaschinenvorrichtung weist ein Leitungssystem 44 auf. Das Leitungssystem 44 ist zur Leitung einer Getränkeflüssigkeit 12 durch die Getränkemaschinenvorrichtung vorgesehen. Das Leitungssystem 44 weist zumindest einen Leitkanal 46 auf. Der Leitkanal 46 leitet die Getränkeflüssigkeit 12. Ferner verbindet der Leitkanal 46 weitere, die Getränkeflüssigkeit 12 führende Bauteile der Getränkemaschinenvorrichtung miteinander. Der Leitkanal 46 weist mehrere Teilkanäle 60, 62, 64, 66, 68, 70 auf, welche die weiteren, die Getränkeflüssigkeit 12 leitenden Bauteile der Getränkemaschinenvorrichtung fluidtechnisch miteinander verbinden. Ferner umfasst das Leitungssystem 44 alle die Getränkeflüssigkeit 12 leitenden Bauteile der Getränkemaschinenvorrichtung. Eine Getränkepumpe 10 kann mit dem Leitungssystem 44 angeschlossen bzw. verbunden sein. Die Getränkepumpe 10 ist selbst idealisiert betrachtet jedoch nicht Teil des Leitungssystems 44, da diese die Getränkeflüssigkeit 12 aktiv fördert.

Das Leitungssystem 44 bildet eine Last, mit welcher die Getränkepumpe 10 in einem Betrieb beaufschlagt ist, wenn diese die Getränkeflüssigkeit 12 fördert. Das Leitungssystem 44 weist zumindest eine Lastkennlinie auf. Die Lastkennlinie beschreibt einen Zusammenhang zwischen einem erzeugten Wert der Strömungskenngröße und dem sich daraufhin einstellenden Wert der weiteren Strömungskenngröße, mit welcher die Getränkepumpe in einem Betriebszustand belastet ist. Die Lastkennlinie gibt einen einer Förderung durch die Getränkepumpe 10 entgegenwirkenden Strömungswiderstand an. Der Strömungswiderstand ergibt sich aus einer Steigung der Lastkennlinie. Die Lastkennlinie ist variierbar durch eine Variation einer Ausgestaltung des Leitungssystems 44. Beispielsweise kann die Lastkennlinie durch Aktivieren und/oder Deaktivieren von Bauteilen des Leitungssystems 44 variiert werden. Ferner ist denkbar, dass sich die Lastkennlinie während einer Standzeit durch Zusetzen und/oder Verstopfen des Leitungssystems 44 verändert.

Die Getränkemaschinenvorrichtung weist zumindest eine Sensoreinheit 42 auf. Die Sensoreinheit 42 ist in einem Betriebszustand von der Getränkeflüssigkeit 12 durchströmt. Die Sensoreinheit 42 bildet zumindest teilweise das Leitungssystem 44 aus. Die Sensoreinheit 42 ist fluidtechnisch dem Getränkeflüssigkeitsspeicher 38 nachgeschaltet. Die Sensoreinheit 42 ist mittels des Teilkanals 60 des Leitkanals 46 mit dem Getränkeflüssigkeitsspeicher 38 verbunden. Ein erster Anschluss des Teilkanals 60 ist mit dem Getränkeflüssigkeitsspeicher 38 verbunden. Ein zweiter Anschluss des Teilkanals 60 ist mit der Sensoreinheit 42 verbunden. Im vorliegenden Fall ist die Sensoreinheit 42 zur Detektion der weiteren Strömungskenngröße vorgesehen. Die Sensoreinheit 42 ist demnach als ein Durchflussmessgerät, wie beispielsweise ein Flowmeter, ausgebildet.

Die Getränkemaschinenvorrichtung weist zumindest die Getränkepumpe 10 auf. Im vorliegenden Fall weist die Getränkemaschinenvorrichtung eine einzige Getränkepumpe 10 auf. Die Getränkepumpe 10 ist der Sensoreinheit 42 fluidtechnisch nachgeschaltet. Demnach ist die Sensoreinheit 42 fluidtechnisch zwischen dem Getränkeflüssigkeitsspeicher 38 und der Getränkepumpe 10 angeordnet. Alternativ könnte der Sensor auch an einer anderen, von einem Fachmann als vorteilhaft angesehenen Position entlang dem Leitungssystem 44 angeordnet sein. Die Getränkepumpe 10 ist über einen Teilkanal 62 mit dem Leitungssystem 44 verbunden. Ferner ist die Getränkepumpe 10 über einen Teilkanal 64 mit dem Leitungssystem 44 verbunden. Die Getränkepumpe 10 ist mittels des Teilkanals 62 des Leitkanals 46 mit der Sensoreinheit 42 fluidtechnisch verbunden. Ein erster Anschluss des Teilkanals 62 ist mit der Sensoreinheit 42 verbunden. Ein zweiter Anschluss des Teilkanals 62 ist mit der Getränkepumpe 10 verbunden.

Die Getränkepumpe 10 ist zumindest teilweise lebensmittelecht ausgebildet. Zumindest Bauteile der Getränkepumpe 10, welche mit der Getränkeflüssigkeit 12 in Kontakt kommen, sind lebensmittelecht ausgebildet. Die Getränkepumpe 10 ist im vorliegenden Fall als eine Schwingankerpumpe ausgebildet. Die Getränkepumpe 10 ist zur Förderung der Getränkeflüssigkeit 12 vorgesehen. Die Fördereigenschaften zur Förderung der Getränkeflüssigkeit 12 der Getränkepumpe 10 sind durch eine Pumpenkennlinie beschrieben. Die Pumpenkennlinie beschreibt einen Zusammenhang zwischen einem von der Getränkepumpe 10 erzeugten Wert der Strömungskenngröße und dem sich daraufhin einstellenden Wert der weiteren Strömungskenngröße. Die Pumpenkennlinie ist dabei ein Maß für eine Leistungsfähigkeit der Getränkepumpe 10. Die Pumpenkennlinie ist somit durch Variation einer Leistung, mit welcher die Getränkepumpe 10 angesteuert ist, variierbar. Eine unterhalb der Pumpenkennlinie eingeschlossene Fläche entspricht dabei einer Leistung der Getränkepumpe 10. Die Pumpenkennlinie ist durch zumindest einen Leistungsparameter variierbar.

Zur Ansteuerung der Getränkepumpe 10 weist die Getränkemaschinenvorrichtung zumindest eine Steuereinheit 18 auf. Die Steuereinheit 18 ist elektrisch mit der Getränkepumpe 10 verbunden. Die Steuereinheit 18 stellt der Getränkepumpe 10 eine Wechselspannung von 230 V zur Verfügung. Die Wechselspannung weist dabei eine Frequenz von 50 Hz auf. Alternativ kann auch eine für einen Fachmann vorteilhafte, insbesondere länderspezifische Netzspannung als Wechselspannung zur Verfügung gestellt werden, wie beispielsweise eine Wechselspannung von 120 V mit einer Frequenz von 60 Hz, eine Wechselspannung von 100 V mit einer Frequenz von 50 Hz oder dergleichen. Die Steuereinheit 18 weist dazu ein spannungsgeregeltes Netzteil (nicht dargestellt) auf. Die Steuereinheit 18 sieht eine Ansteuerung mittels einer Variation eines Werts der Leistungskenngröße vor. Die Leistungskenngröße ist im vorliegenden Fall ein Anteil einer Halbwelle der Spannung, welche an der Getränkepumpe 10 anliegt. Die Steuereinheit 18 sieht demnach zur Ansteuerung der Getränkepumpe 10 eine Phasenanschnittsteuerung vor. Zur Phasenanschnittsteuerung ist die Steuereinheit 18 dazu vorgesehen, die Leistungskenngröße von einem Minimalwert von 0° bis zu einem Maximalwert von 90° zu variieren. Die Steuereinheit 18 kann die Leistungsparameter kontinuierlich variieren. Alternativ oder zusätzlich könnte die Steuereinheit 18 die Leistungskenngröße schrittweise variieren. Ferner sind weitere Steuermethoden denkbar, wie beispielsweise eine Pulsweitenmodulation, eine Amplitudenanpassung und/oder eine Frequenzanpassung.

Die Steuereinheit 18 ist dazu vorgesehen, die weitere Strömungskenngröße wenigstens bereichsweise unabhängig von der Strömungskenngröße einzustellen. Im vorliegenden Fall kann die Steuereinheit 18 durch Verringern der Leistungskenngröße die Pumpenkennlinie und damit den weiteren Strömungskennwert einstellen. Dies kann die Steuereinheit 18 gezielt durch Abrufen der in ihrer Speichereinheit hinterlegten Pumpenkennlinien durchführen. Ferner kann die Steuereinheit 18 einen von der Sensoreinheit 42 gemessenen Wert der weiteren Strömungskenngröße mit einem bevorzugt einzustellenden Wert der weiteren Strömungskennlinie abgleichen und die Leistungskenngröße anpassen, bis diese übereinstimmen. Ferner kann die Steuereinheit 18 während eines Getränkezubereitungsvorgangs die weitere Strömungskenngröße variieren. Mittels der Steuereinheit 18 ist insbesondere für einen Bediener und/oder automatisch die weitere Strömungskenngröße einstellbar. Dazu weist die Steuereinheit 18 z.B. ein Bedienelement 50 auf. Das Bedienelement 50 ist im vorliegenden Fall als ein Touchdisplay ausgebildet (vgl. Figur 1).

Die Getränkemaschinenvorrichtung weist eine Zubereitungseinheit 30 auf. Die Zubereitungseinheit 30 bildet zumindest teilweise das Leitungssystem 44 aus. Die Zubereitungseinheit 30 ist der Getränkepumpe 10 fluidtechnisch nachgeschaltet. Demnach ist die Getränkepumpe 10 fluidtechnisch zwischen der Sensoreinheit 42 und der Zubereitungseinheit 30 angeordnet. Die Zubereitungseinheit 30 ist mittels des Teilkanals 64 fluidtechnisch mit der Getränkepumpe 10 verbunden. Ein erster Anschluss des Teilkanals 64 ist mit der Getränkepumpe 10 fluidtechnisch verbunden. Ein zweiter Anschluss des Teilkanals 64 ist mit der Zubereitungseinheit 30 verbunden. Die Zubereitungseinheit 30 ist zur Zubereitung des Getränks vorgesehen. Im vorliegenden Fall ist die Zubereitungseinheit 30 als eine Brüheinheit ausgebildet, welche zum Aufbrühen des Getränks vorgesehen ist.

Die Zubereitungseinheit 30 weist eine Temperiereinheit 54 auf. Die Temperiereinheit 54 bildet zumindest teilweise das Leitungssystem 44 aus. Die Temperiereinheit 54 ist der Getränkepumpe 10 fluidtechnisch nachgeschaltet. Die Temperiereinheit 54 ist mit dem zweiten Anschluss des Teilkanals 64 fluidtechnisch verbunden. Demnach ist die Getränkepumpe 10 zwischen der Sensoreinheit 42 und der Temperiereinheit 54 angeordnet. Die Temperiereinheit 54 ist zum Temperieren der Getränkeflüssigkeit 12 vorgesehen. Im vorliegenden Fall ist die Temperiereinheit 54 als eine Heizeinheit ausgebildet. Dazu kann die Temperiereinheit 54 beispielsweise einen Heizdraht aufweisen. Alternativ oder zusätzlich könnte die Temperiereinheit 54 zu einem Kühlen der Getränkeflüssigkeit 12 vorgesehen sein.

Die Zubereitungseinheit 30 weist ferner eine Brüheinheit 56 auf. Die Brüheinheit 56 bildet zumindest teilweise das Leitungssystem 44 aus. Die Brüheinheit 56 ist der Temperiereinheit 54 fluidtechnisch nachgeschaltet. Die Temperiereinheit 54 ist demnach fluidtechnisch zwischen der Getränkepumpe 10 und der Brüheinheit 56 angeordnet. Die Brüheinheit 56 ist mittels eines Teilkanals 66 mit der Temperiereinheit 54 fluidtechnisch verbunden. Ein erster Anschluss des Teilkanals 66 ist mit der Temperiereinheit 54 verbunden. Ein zweiter Anschluss des Teilkanals 66 ist mit der Brüheinheit 56 fluidtechnisch verbunden. Die Brüheinheit 56 weist eine Zutatenaufnahme (nicht dargestellt) auf. Die Zutatenaufnahme ist mit dem Zutatenspeicher 36 verbunden. Derart kann die Zutatenaufnahme mit einer Getränkezutat aus dem Zutatenspeicher 36 befüllt werden. Ferner ist die Zutatenaufnahme dazu vorgesehen, bei einer Förderung der Getränkeflüssigkeit 12 von dieser durchflossen zu werden. Dazu ist die Zutatenaufnahme siebartig ausgebildet.

Ferner weist die Getränkemaschinenvorrichtung zumindest eine Regeleinheit 14 auf. Die Regeleinheit 14 ist in zumindest einem Betriebszustand zumindest teilweise von der Getränkeflüssigkeit 12 durchflossen. Die Regeleinheit 14 bildet zumindest teilweise das Leitungssystem 44 aus. Die Regeleinheit 14 ist fluidtechnisch der Zubereitungseinheit 30 nachgeschaltet. Demnach ist die Zubereitungseinheit 30 fluidtechnisch zumindest teilweise zwischen der Getränkepumpe 10 und der Regeleinheit 14 angeordnet. Ferner ist die Brüheinheit 56 der Zubereitungseinheit 30 fluidtechnisch zwischen der Temperiereinheit 54 der Zubereitungseinheit 30 und der Regeleinheit 14 angeordnet. Die Regeleinheit 14 ist über einen Teilkanal 68 mit der Zubereitungseinheit 30 fluidtechnisch verbunden. Ein erster Anschluss des Teilkanals 68 ist mit der Zubereitungseinheit 30 fluidtechnisch verbunden. Genauer gesagt ist der erste Anschluss des Teilkanals 68 mit der Brüheinheit 56 fluidtechnisch verbunden. Ein zweiter Anschluss des Teilkanals 68 ist fluidtechnisch mit der Regeleinheit 14 verbunden. Die Regeleinheit 14 ist dazu vorgesehen, die Strömungskenngröße zumindest im Wesentlichen auf wenigstens einen vorbestimmten Wert einzuregeln. Im vorliegenden Fall ist die Regeleinheit 14 dazu vorgesehen, die Strömungskenngröße auf einen Wert von 8 bar einzuregeln. Der Wert der Strömungskenngröße ist vorbestimmbar. Beispielsweise kann der vorbestimmte Wert der Strömungskenngröße von einem Bediener und/oder automatisch, insbesondere in Abhängigkeit einer Getränkevariante, vorgegeben und/oder eingestellt werden. Die Regeleinheit 14 ist ferner dazu vorgesehen, die Strömungskenngröße wenigstens bereichsweise auf den zumindest im Wesentlichen konstanten Wert einzuregeln. Im vorliegenden Fall ist die Regeleinheit 14 dazu vorgesehen, die Strömungskenngröße abhängig von einem Wertebereich der weiteren Strömungskenngröße von 20 bis 300 ml/min auf einen vorbestimmten Wert einzuregeln.

Die Regeleinheit 14 ist im vorliegenden Fall als ein Druckregler 24 ausgebildet. Die Regeleinheit 14 weist ein Ventilelement 74 auf, das eine Steuerfläche 76 aufweist. In dem Betriebszustand öffnet oder schließt die Regeleinheit 14 in Abhängigkeit von einem auf die Steuerfläche 76 wirkenden Druck das Leitungssystem 44 durch Bewegung des Ventilelements 74. Im vorliegenden Ausführungsbeispiel ist der auf die Steuerfläche 76 wirkende Druck ein Gasdruck. Die Steuerfläche 76 ist außerhalb des Leitungssystems 44 angeordnet. In jedem Betriebszustand ist die Steuerfläche 76 beabstandet zu der in dem Leitungssystem 44 befindlichen Getränkeflüssigkeit 12 angeordnet.

Das Ventilelement 74 weist eine zweite Steuerfläche 78 auf. In dem Betriebszustand ist die zweite Steuerfläche 78 innerhalb des Leitungssystems 44 angeordnet. Die zweite Steuerfläche 78 ist mit der Getränkeflüssigkeit 12 beaufschlagt. Die zweite Steuerfläche 78 ist in dem Leitungssystem 44 angeordnet. Das Ventilelement 74 befindet sich in dem Betriebszustand in einem Schließzustand. Die Steuerfläche 76 und die zweite Steuerfläche 78 sind fluidtechnisch gleichgerichtet.

Das Ventilelement 74 weist eine dritte Steuerfläche 80 auf. Die dritte Steuerfläche 80 ist der Steuerfläche 76 fluidtechnisch entgegengerichtet. In jedem Betriebszustand ist die dritte Steuerfläche 80 beabstandet zu der in dem Leitungssystem 44 befindlichen Getränkeflüssigkeit 12 angeordnet. Die dritte Steuerfläche 80 ist außerhalb des Leitungssystems 44 angeordnet.

Der Regeleinheit 14 weist ein Federelement 82 auf. Das Federelement 82 ist als eine Druckfeder ausgebildet. In dem Betriebszustand ist das Federelement 82 in Kontakt mit dem Ventilelement 74 angeordnet. Das Federelement 82 beaufschlagt das Ventilelement 74 in dem Betriebszustand mit einer Federkraft. In dem Betriebszustand wirkt das Federelement 82 einer durch die Getränkeflüssigkeit 12 an der Steuerfläche 76 und/oder an der weiteren Steuerfläche 78 erzeugten Kraft teilweise entgegen.

Die Regeleinheit 14 weist eine Einstelleinheit 86 auf. Mittels der Einstelleinheit 86 ist ein Öffnungswiderstand des Ventilelements 74 einstellbar. Die Einstelleinheit 86 ist als eine Gewindeeinheit ausgebildet. Mittels der Einstelleinheit 86 ist das Federelement 82 beeinflussbar. Mittels der Einstelleinheit 86 kann eine Vorspannung des Federelements 82 verstellt werden. Demnach kann eine Federkraft, mit welcher das Federelement 82 das Ventilelement 74 in dem Betriebszustand beaufschlagt, mittels der Einstelleinheit 86 eingestellt werden. Im vorliegenden Ausführungsbeispiel ist die Einstelleinheit 86 manuell betätigbar. Durch Betätigung der Einstelleinheit 86 kann ein Öffnungswiderstand des Ventilelements 74 eingestellt werden. Dadurch kann ein Wert, auf welchen die Strömungskenngröße von der Regeleinheit 14 eingeregelt wird, vorbestimmt werden.

Die Regeleinheit 14 weist eine Ausgleichsausnehmung 72 auf. Die Ausgleichsausnehmung 72 dient zum Ausgleich eines sich in der Regeleinheit 14 einstellenden Werts der Strömungskenngröße. Die Ausgleichsausnehmung 72 ist in einem Bereich einer Einstelleinheit 86 angeordnet.

Die Regeleinheit 14 weist eine Rückkopplung 84 auf. Die Rückkopplung 84 ist als ein Regelkanal ausgebildet. Die Rückkopplung 84 beaufschlagt die Steuerflächen 76, 80 mit einem vor der Zubereitungseinheit 30 auftretenden Strömungskennwert. Die Rückkopplung 84 ist kein Teil des Leitungssystems 44. in dem Betriebszustand ist die Rückkopplung 84 frei von einer Getränkeflüssigkeit 12. Die Rückkopplung 84 ist gasgefüllt. Die Rückkopplung 84 zweigt von dem Leitungssystem 44 ab. Die Rückkopplung 84 zweigt zwischen der Getränkepumpe 10 und der Zubereitungseinheit 30 von dem Leitungssystem 44 ab. Die Rückkopplung 84 ist mit einem dritten Anschluss des Teilkanals 64 verbunden. Die Rückkopplung 84 führt von dem Leitungssystem 44 zu der Steuerfläche 76. Die Rückkopplung 84 überbrückt die Zubereitungseinheit 30. Dadurch regelt die Regeleinheit 14 einen Wert der Strömungskenngröße über die Zubereitungseinheit 30 im Wesentlichen konstant.

Die Regeleinheit 14 ist, insbesondere von einem Benutzer, aktivierbar und/oder deaktivierbar. Die Regeleinheit 14 kann durch Betätigung der Einstelleinheit 86 bzw. vollständiges Öffnen der Einstelleinheit 86 deaktivierbar sein. Die Regeleinheit 14 ist in einem aktiven Zustand zu einer Beeinflussung der Lastkennlinie vorgesehen. Derart regelt die Regeleinheit 14 die Strömungskennlinie und somit zumindest einen vorbestimmten Strömungskennwert der Strömungskennlinie zumindest bereichsweise auf einen vorbestimmten Wert. Ferner ist die Regeleinheit 14 in einem deaktivierten Zustand dazu vorgesehen, die Lastkennlinie nicht wesentlich zu beeinflussen.

Die Getränkemaschinenvorrichtung weist eine Getränkeausgabeeinheit 58 auf. Die Getränkeausgabeeinheit 58 bildet zumindest teilweise das Leitungssystem 44 aus. Die Getränkeausgabeeinheit 58 ist fluidtechnisch der Regeleinheit 14 nachgeschaltet. Die Getränkeausgabeeinheit 58 ist fluidtechnisch mittels eines Teilkanals 70 mit der Regeleinheit 14 verbunden. Ein erster Anschluss des Teilkanals 70 ist fluidtechnisch mit der Regeleinheit 14 verbunden. Ein zweiter Anschluss des Teilkanals 70 ist fluidtechnisch mit der Getränkeausgabeeinheit 58 verbunden. Die Getränkeausgabeeinheit 58 ist zu einer Ausgabe des bereiteten Getränks vorgesehen.

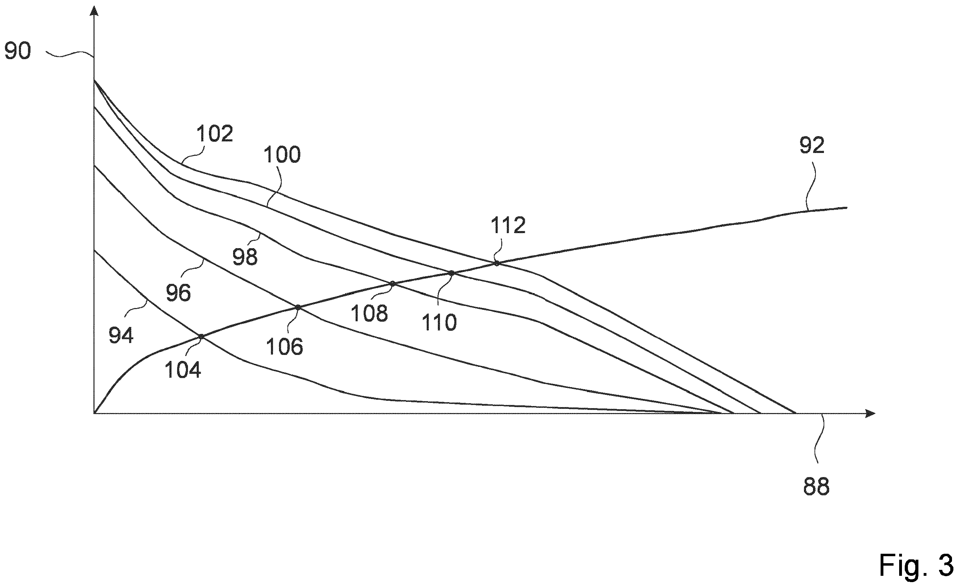

Figur 3 zeigt ein schematisches Diagramm mit idealisierten Kennlinien der Getränkepumpe 10 und des Leitungssystems 44. Das Diagramm weist eine Abszissenachse 88 auf. Auf der Abszissenachse 88 ist die Strömungskenngröße aufgetragen. Ferner zeigt das Diagramm eine Ordinatenachse 90. Auf der Ordinatenachse 90 ist die weitere Strömungskenngröße aufgetragen. Ferner zeigt das Diagramm eine Lastkennlinie 92 des Leitungssystems 44. Im vorliegenden Beispiel ist die Regeleinheit 14 deaktiviert. Demnach regelt die Regeleinheit 14 in der Lastkennlinie 92 nicht die Strömungskenngröße bereichsweise auf einen vorbestimmten zumindest konstanten Wert. Eine Deaktivierung der Regeleinheit 14 kann dabei mittels der Einstelleinheit 86 erfolgen, beispielsweise durch Aufheben der Vorspannung des Federelements 82.

Das Diagramm zeigt ferner fünf Pumpenkennlinien 94, 96, 98, 100, 102. Das Diagramm zeigt eine erste Pumpenkennlinie 94. Ferner zeigt das Diagramm eine zweite Pumpenkennlinie 96. Ferner zeigt das Diagramm eine dritte Pumpenkennlinie 98. Ferner zeigt das Diagramm eine vierte Pumpenkennlinie 100. Ferner zeigt das Diagramm eine fünfte Pumpenkennlinie 102. Die Pumpenkennlinien 94, 96, 98, 100, 102 zeigen zueinander verschiedene Verläufe. Die verschiedenen Verläufe resultieren aus unterschiedlichen leistungsabhängigen Ansteuerungen der Getränkepumpe 10 durch die Steuereinheit 18. Die Steuereinheit 18 führt eine Phasenanschnittsteuerung aus. Die Pumpenkennlinien 94, 96, 98, 100, 102 unterscheiden sich durch einen unterschiedlichen Grad des durch die Steuereinheit 18 durchgeführten Phasenanschnitts. Die erste Pumpenkennlinie 94 entspricht einer Phasenanschnittsteuerung mit einem Phasenanschnitt von 90°. Die zweite Pumpenkennlinie 96 entspricht einer Phasenanschnittsteuerung mit einem Phasenanschnitt von 75°. Die dritte Pumpenkennlinie 98 entspricht einer Phasenanschnittsteuerung mit einem Phasenanschnitt von 60°. Die vierte Pumpenkennlinie 100 entspricht einer Phasenanschnittsteuerung mit einem Phasenanschnitt von 45°. Die fünfte Pumpenkennlinie 102 entspricht einer Phasenanschnittsteuerung mit einem Phasenanschnitt von 0°.

Ein Arbeitspunkt für die Getränkepumpe 10 ergibt sich jeweils aus einem Schnittpunkt der Lastkennlinie 92 mit der jeweiligen aus der Ansteuerung resultierenden Pumpenkennlinie 94, 96, 98, 100, 102. Im vorliegenden Fall sind in dem Diagramm fünf verschiedene Arbeitspunkte 104, 106, 108, 110, 112 für die Getränkepumpe 10 zu entnehmen. Ein erster Arbeitspunkt 104 entspricht einem Schnittpunkt der ersten Pumpenkennlinie 94 und der Lastkennlinie 92. Der erste Arbeitspunkt 104 weist einen Wert einer Strömungskenngröße von 2,8 bar auf. Ferner weist der erste Arbeitspunkt 104 einen Wert einer weiteren Strömungskenngröße von 120 ml/min auf. Ein zweiter Arbeitspunkt 106 entspricht einem Schnittpunkt der zweiten Pumpenkennlinie 96 und der Lastkennlinie 92. Der zweite Arbeitspunkt 106 weist einen Wert einer Strömungskenngröße von 5,4 bar auf. Ferner weist der zweite Arbeitspunkt 106 einen Wert einer weiteren Strömungskenngröße von 165 ml/min auf. Ein dritter Arbeitspunkt 108 entspricht einem Schnittpunkt der dritten Pumpenkennlinie 98 und der Lastkennlinie 92. Der dritte Arbeitspunkt 108 weist einen Wert einer Strömungskenngröße von 8 bar auf. Ferner weist der dritte Arbeitspunkt 108 einen Wert einer weiteren Strömungskenngröße von 200 ml/min auf. Ein vierter Arbeitspunkt 110 entspricht einem Schnittpunkt der vierten Pumpenkennlinie 100 und der Lastkennlinie 92. Der vierte Arbeitspunkt 110 weist einen Wert einer Strömungskenngröße von 9,4 bar auf. Ferner weist der vierte Arbeitspunkt 110 einen Wert einer weiteren Strömungskenngröße von 220 ml/min. auf. Ein fünfter Arbeitspunkt 112 entspricht dem Schnittpunkt der fünften Pumpenkennlinie 102 und der Lastkennlinie 92. Der fünfte Arbeitspunkt 112 weist einen Wert einer Strömungskenngröße von 10,8 bar auf. Ferner weist der fünfte Arbeitspunkt 112 einen Wert einer weiteren Strömungskenngröße von 230 ml/min auf. Anhand der Werte der Kenngrößen der jeweiligen Arbeitspunkte 104, 106, 108, 110, 112 kann hier beobachtet werden, dass zwischen den Arbeitspunkten 104, 106, 108, 110, 112 nur dann gewechselt werden kann, wenn sowohl ein Wert der Strömungskenngröße als auch ein Wert der weiteren Strömungskenngröße variiert wird.

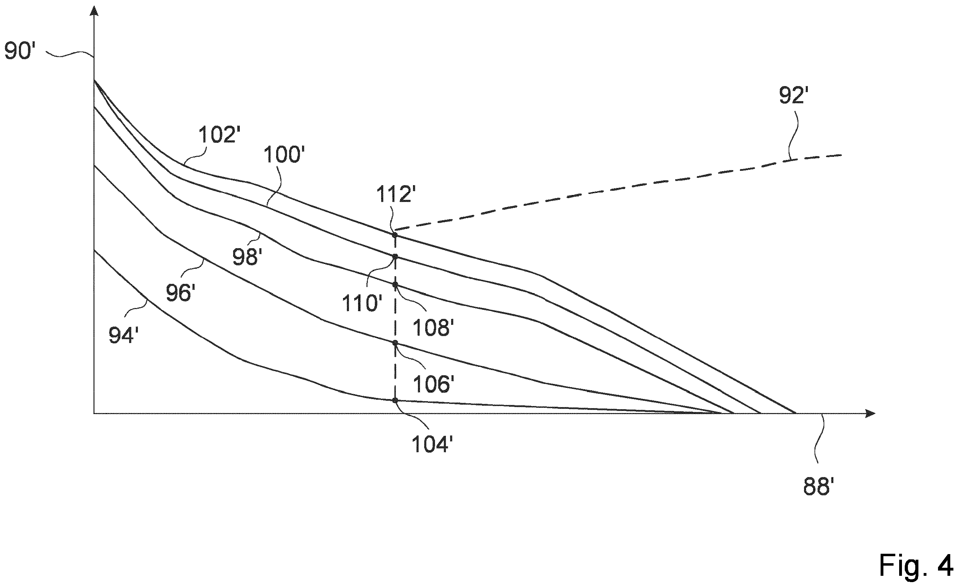

Figur 4 zeigt ein weiteres schematisches Diagramm mit idealisierten Kennlinien der Getränkepumpe 10 und des Leitungssystems 44. Das Diagramm weist eine Abszissenachse 88' auf. Auf der Abszissenachse 88' ist die Strömungskenngröße aufgetragen. Ferner zeigt das Diagramm eine Ordinatenachse 90'. Auf der Ordinatenachse 90' ist die weitere Strömungskenngröße aufgetragen. Ferner zeigt das Diagramm eine Lastkennlinie 92' des Leitungssystems 44. Im vorliegenden Beispiel ist die Regeleinheit 14 aktiviert. Demnach regelt die Regeleinheit 14 in der Lastkennlinie 92' die Strömungskenngröße bereichsweise auf einen vorbestimmten zumindest konstanten Wert. Eine Aktivierung der Regeleinheit 14 kann dabei mittels der Einstelleinheit 86 erfolgen, beispielsweise durch Aufheben der Vorspannung des Federelements 82.

Das Diagramm zeigt ferner fünf Pumpenkennlinien 94', 96', 98', 100', 102'. Die Pumpenkennlinien 94', 96', 98', 100', 102' sind identisch zu den Pumpenkennlinien 94, 96, 98, 100, 102 aus dem Diagramm in Figur 3.

Ein Arbeitspunkt für die Getränkepumpe 10 ergibt sich jeweils aus einem Schnittpunkt der Lastkennlinie 92' mit der jeweiligen aus der Ansteuerung resultierenden Pumpenkennlinie 94', 96', 98', 100', 102'. Im vorliegenden Fall sind in dem Diagramm fünf verschiedene Arbeitspunkte 104', 106', 108', 110', 112' fürdie Getränkepumpe 10 zu entnehmen. Ein erster Arbeitspunkt 104' entspricht einem Schnittpunkt der ersten Pumpenkennlinie 94' und der Lastkennlinie 92'. Der erste Arbeitspunkt 104' weist einen Wert einer Strömungskenngröße von 8 bar auf. Ferner weist der erste Arbeitspunkt 104' einen Wert einer weiteren Strömungskenngröße von 22 ml/min auf. Ein zweiter Arbeitspunkt 106' entspricht einem Schnittpunkt der zweiten Pumpenkennlinie 96' und der Lastkennlinie 92'. Der zweite Arbeitspunkt 106' weist einen Wert einer Strömungskenngröße von 8 bar auf. Ferner weist der zweite Arbeitspunkt 106' einen Wert einer weiteren Strömungskenngröße von 110 ml/min auf. Ein dritter Arbeitspunkt 108' entspricht einem Schnittpunkt der dritten Pumpenkennlinie 98' und der Lastkennlinie 92'. Der dritte Arbeitspunkt 108' weist einen Wert einer Strömungskenngröße von 8 bar auf. Ferner weist der dritte Arbeitspunkt 108' einen Wert einer weiteren Strömungskenngröße von 200 ml/min auf. Ein vierter Arbeitspunkt 110' entspricht einem Schnittpunkt der vierten Pumpenkennlinie 100' und der Lastkennlinie 92'. Der vierte Arbeitspunkt 110' weist einen Wert einer Strömungskenngröße von 8 bar auf. Ferner weist der vierte Arbeitspunkt 110' einen Wert einer weiteren Strömungskenngröße von 240 ml/min auf. Ein fünfter Arbeitspunkt 112' entspricht dem Schnittpunkt der fünften Pumpenkennlinie 102' und der Lastkennlinie 92'.

Der fünfte Arbeitspunkt 112' weist einen Wert einer Strömungskenngröße von 8 bar auf. Ferner weist der fünfte Arbeitspunkt 112' einen Wert einer weiteren Strömungskenngröße von 280 ml/min auf. Im vorliegenden Fall, insbesondere bei Aktivierung der Regeleinheit 14, kann anhand der Werte der Kenngrößen der jeweiligen Arbeitspunkte 104', 106', 108', 110', 112' beobachtet werden, dass zwischen den Arbeitspunkten 104', 106', 108', 110', 112' gewechselt werden kann, wobei lediglich ein Wert der weiteren Strömungskenngröße variiert werden muss, während der Wert der Strömungskenngröße auf einen bereichsweise im Wesentlichen konstanten Wert geregelt ist.

Figur 4 zeigt einen schematischen Ablaufplan eines Verfahrens zum Betrieb der Getränkemaschinenvorrichtung.

Das Verfahren umfasst einen Verfahrensschritt 120. in dem Verfahrensschritt 120 wird eine Getränkezubereitung einer Getränkevariante zumindest teilweise durchgeführt. Ein Bediener wählt die Getränkevariante aus. Im vorliegenden Fall wählt der Bediener als Getränkevariante beispielsweise einen Espresso zur Bereitung aus. Dazu betätigt der Bediener ein Auswahlfeld der Steuereinheit 18. Die Steuereinheit 18 initialisiert einen Bereitungsprozess. Die Steuereinheit 18 ruft Zubereitungsparameter für die Bereitung der gewählten Getränkevariante ab. Als ein Zubereitungsparameter ruft die Steuereinheit 18 einen vorbestimmten Mahlgrad ab. Die Steuereinheit 18 steuert die Mühle an. Die Mühle wird mit Kaffeebohnen befüllt. Die Kaffeebohnen werden entsprechend dem vorbestimmten Mahlgrad zu Kaffeepulver gemahlen. Kaffeepulver wird der Zubereitungseinheit 30, insbesondere einer Brüheinheit 56, zugeführt. Die Zutatenaufnahme der Brüheinheit 56 wird mit dem Kaffeepulver befüllt.

Das Verfahren umfasst einen weiteren Verfahrensschritt 122. in dem weiteren Verfahrensschritt 122 ruft die Steuereinheit 18 als Zubereitungsparameter die für die Getränkevariante vorbestimmten Werte der Strömungskenngröße und der weiteren Strömungskenngröße auf. Die Steuereinheit 18 steuert die Getränkepumpe 10 an. Die Getränkeflüssigkeit 12 wird mittels der Getränkepumpe 10 gefördert. Die Steuereinheit 18 aktiviert die Regeleinheit 14. Die Regeleinheit 14 regelt einen Wert der weiteren entsprechenden Lastkennlinie 92' aus Figur 4 auf einen im Wesentlichen konstanten Wert. Die Lastkennlinie 92' ist dabei abhängig von der Getränkevariante und beispielsweise durch den Mahlgrad und/oder die Getränkevariante definiert. Zum Abgleich sind in der Steuereinheit 18 für verschiedene Getränkevarianten, insbesondere in Abhängigkeit des Mahlgrads, die entsprechenden Lastkennlinien 92' hinterlegt. Die Steuereinheit 18 steuert die Getränkepumpe 10 entsprechend einem vorbestimmten Wert für den weiteren Strömungskennwert an. Die Pumpenkennlinien 94', 96', 98', 100', 102'. sind in der Steuereinheit 18 hinterlegt. Die Pumpenkennlinien 94', 96', 98', 100', 102'. sind leistungsabhängig. Durch eine leistungsabhängige Ansteuerung, wie im vorliegenden Fall durch eine Phasenanschnittsteuerung, kann die Getränkepumpe 10 entsprechend der Pumpenkennlinien 94', 96', 98', 100', 102' angesteuert werden. Beispielsweise sieht im vorliegenden Fall der vorbestimmte Wert der weiteren Strömungskenngröße für die Getränkevariante, einen Phasenanschnitt vor, welcher dem fünften Arbeitspunkt 112' entspricht.

Das Verfahren umfasst einen weiteren Verfahrensschritt 124. Der weitere Verfahrensschritt 124 findet während einer Getränkezubereitung statt. Bei der Getränkezubereitung kann ein Bediener variabel die weitere Strömungskenngröße einstellen. Beispielsweise kann der Bediener bei Zubereitung von Espresso wie im vorliegenden Fall als weitere Strömungskenngröße einen Durchfluss variieren, wodurch eine Zubereitungszeit verkürzt und/oder eine Menge an Espresso erhöht werden kann. Dazu kann der Bediener das Bedienelement der Steuereinheit 18 während der Getränkezubereitung betätigen. Alternativ oder zusätzlich kann auch eine automatische Variation der weiteren Strömungskenngröße vorgesehen sein. Demnach passt die Steuereinheit 18 den Phasenanschnitt und somit die Pumpenkennlinie 94' entsprechend der variierten weiteren Strömungskenngröße an. Beispielsweise könnte eine resultierende neue Pumpenkennlinie die Pumpenkennlinie 102' sein. Durch die Regeleinheit 14 wird die Strömungskenngröße auf den konstanten Wert eingeregelt, wodurch selbst bei Variation der weiteren Kenngröße dieser unberührt bleibt und gleichzeitig ein Arbeitspunkt 104', 106', 108', 110', 112' eingehalten wird. Beispielsweise findet durch die von dem Bediener und/oder automatisch geänderten Zubereitungsparameter ein Wechsel vom Arbeitspunkt 104' zum Arbeitspunkt 112' statt. Hier ist gezeigt, dass selbst bei dem Wechsel des Arbeitspunkts 104', 106', 108', 110', 112' der Wert der Strömungskenngröße konstant gehalten wird.

Das Verfahren umfasst einen weiteren Verfahrensschritt 126. in dem weiteren Verfahrensschritt 126 ist eine Bereitung der Getränkevariante abgeschlossen. Das Getränk wird in ein Getränkegefäß eingefüllt.

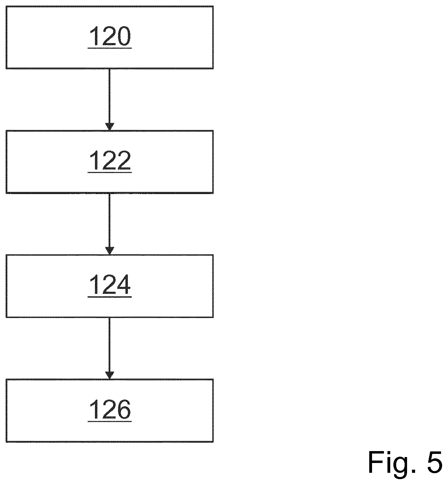

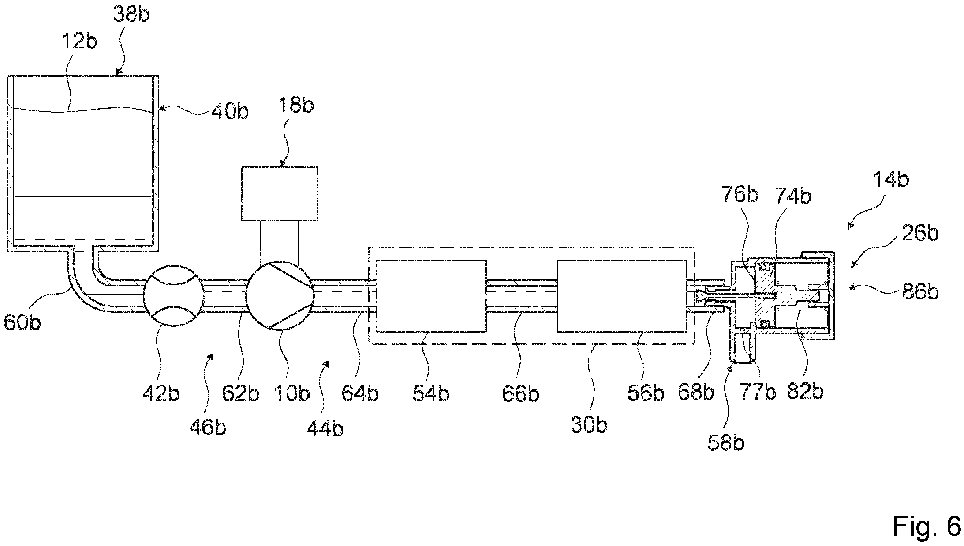

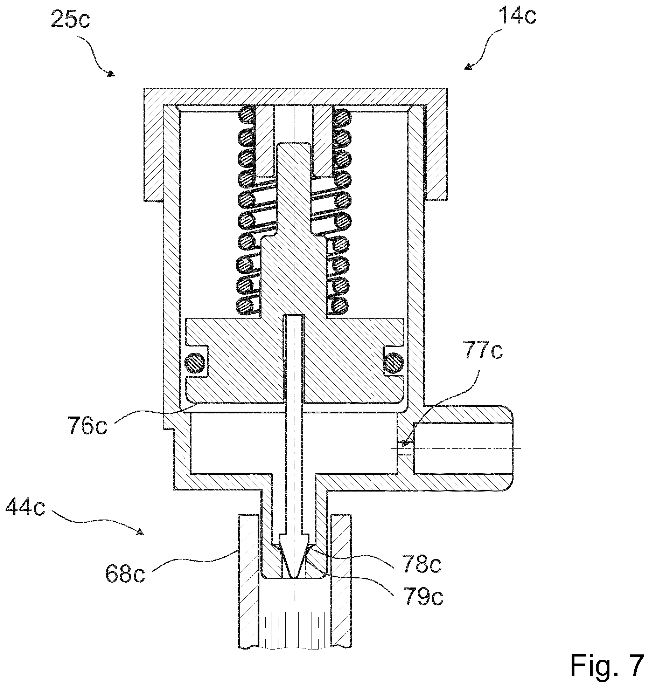

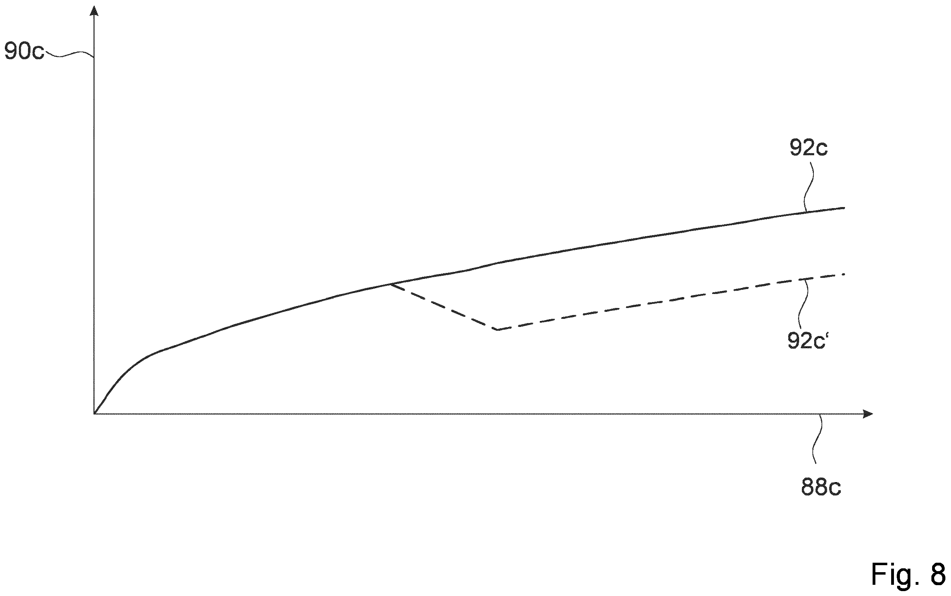

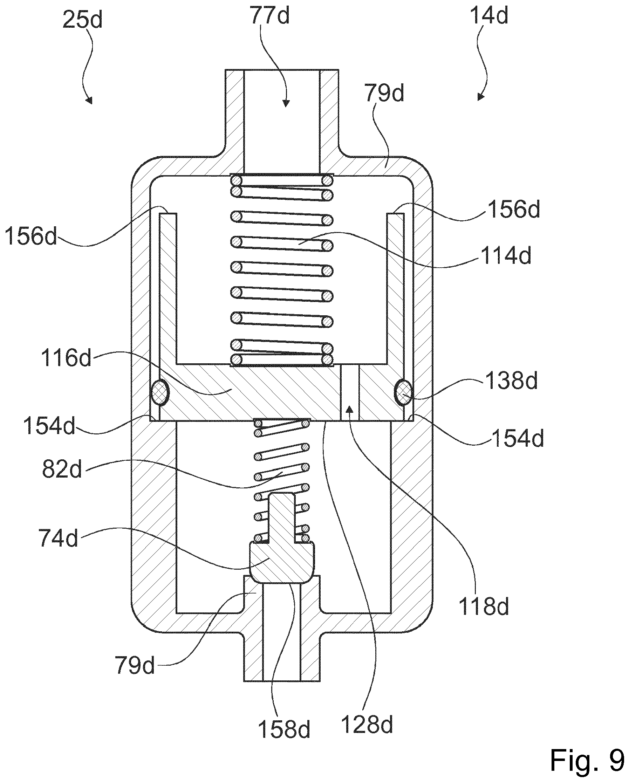

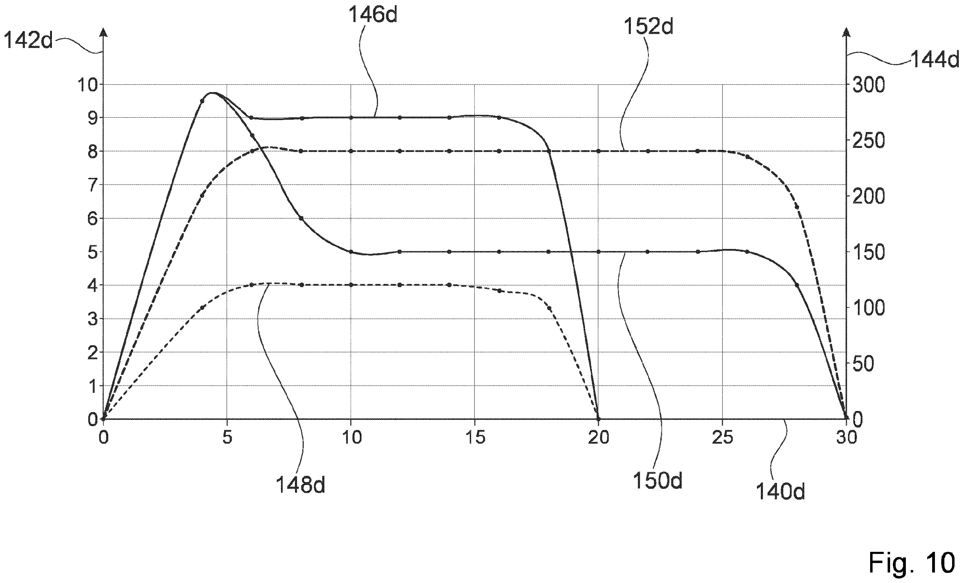

In den Figuren 6 bis 10 sind weitere Ausführungsbeispiele der erfindungsgemäßen Getränkemaschinenvorrichtung gezeigt. Die nachfolgenden Beschreibungen beschränken sich im Wesentlichen auf die Unterschiede zwischen den Ausführungsbeispielen, wobei bezüglich gleich bleibender Verfahren, Verfahrensschritte, Vorrichtungen, Bauteile, Merkmale und Funktionen auf die Beschreibung des Ausführungsbeispiels der Figuren 1 bis 5 verwiesen werden kann. Zur Unterscheidung der Ausführungsbeispiele ist den Bezugszeichen des Ausführungsbeispiels in Figur 6 der Buchstabe b, in den Figuren 7 und 8 der Buchstabe c und in den Figuren 9 und 10 der Buchstabe d nachgestellt. Bezüglich gleich bezeichneter Verfahren, Verfahrensschritte, Vorrichtungen, Bauteile, Merkmale und Funktionen gleicher Bezugszeichen kann grundsätzlich auch auf die Zeichnungen und/oder die Beschreibung des Ausführungsbeispiels der Figuren 1 bis 5 verwiesen werden.

In Figur 6 ist eine schematische Darstellung eines weiteren Ausführungsbeispiels der erfindungsgemäßen Getränkemaschinenvorrichtung dargestellt. Das vorliegende Ausführungsbeispiel unterscheidet sich im Wesentlich von dem vorherigen durch eine Ausgestaltung einer Regeleinheit 14b der Getränkemaschinenvorrichtung sowie insbesondere durch eine durch diese Ausgestaltung veränderte Regelung durch die Regeleinheit 14b und/oder Ansteuerung durch eine Steuereinheit 18b der Getränkemaschinenvorrichtung.

Im vorliegenden Fall ist eine Regeleinheit 14b als ein Durchflussregler 26b ausgebildet. Somit entspricht im vorliegenden Fall eine Strömungskenngröße einem Durchfluss einer Getränkeflüssigkeit 12b. Ferner entspricht im vorliegenden Fall eine weitere Strömungskenngröße dem Druck der Getränkeflüssigkeit 12b.

Die Regeleinheit 14b weist ein Ventilelement 74b auf, das eine Steuerfläche 76b aufweist. Ferner weist die Regeleinheit 14b einen Steuerauslass 77b auf. Der Steuerauslass 77b verengt abschnittsweise das Leitungssystem 44b. in dem Betriebszustand öffnet oder schließt sich das Ventilelement 74b der Regeleinheit 14b in Abhängigkeit von einem auf die Steuerfläche 76b wirkenden Druck, welcher sich durch einen Staudruck an dem Steuerauslass 77b aufbaut. Ist eine aus dem Staudruck abgeleitete auf die Steuerfläche 76b wirkende Kraft größer als eine von einem Federelement 82b der Regeleinheit 14b auf das Ventilelement 74b wirkende Federkraft, so verschließt sich dieses. Für den umgekehrten Fall öffnet sich dieses weiter. Demnach kann mittels einer Einstelleinheit 86b der Regeleinheit 14b der Wert für die weitere Strömungskenngröße eingestellt werden, welcher konstant geregelt werden soll. Alternativ oder zusätzlich könnte eine Einstellung der weiteren Strömungskenngröße durch eine Verstellung einer Position einer Blende des Ventilelements erfolgen.

In Figur 7 ist eine schematische Darstellung eines weiteren Ausführungsbeispiels der erfindungsgemäßen Getränkemaschinenvorrichtung dargestellt. Das vorliegende Ausführungsbeispiel unterscheidet sich im Wesentlich von den vorherigen durch eine Ausgestaltung einer Regeleinheit 14c der Getränkemaschinenvorrichtung sowie insbesondere durch eine durch diese Ausgestaltung veränderte Regelung durch die Regeleinheit 14c und/oder Ansteuerung durch eine Steuereinheit 18c der Getränkemaschinenvorrichtung.

Die Regeleinheit 14c ist im vorliegenden Fall als ein Druck-Durchfluss-Regler 25c ausgebildet. Die Regeleinheit 14c weist ein Ventilelement 74c auf, das eine Steuerfläche 76c aufweist. In dem Betriebszustand öffnet oder schließt die Regeleinheit 14c in Abhängigkeit von einem auf die Steuerfläche 76c wirkenden Druck ein Leitungssystem 44c der Getränkemaschinenvorrichtung durch Bewegung des Ventilelements 74c. Im vorliegenden Ausführungsbeispiel ist der auf die Steuerfläche 76c wirkende Druck ein Druck der Getränkeflüssigkeit 12c. Die Steuerfläche 76c ist innerhalb des Leitungssystems 44c angeordnet. In jedem Betriebszustand ist die Steuerfläche 76c in Kontakt zu einer in dem Leitungssystem 44c befindlichen Getränkeflüssigkeit 12c angeordnet.

Das Ventilelement 74 weist eine zweite Steuerfläche 78c auf. In dem Betriebszustand ist die zweite Steuerfläche 78c innerhalb des Leitungssystems 44c angeordnet. Die zweite Steuerfläche 78c ist mit der Getränkeflüssigkeit 12c beaufschlagt. Die zweite Steuerfläche 78c ist in dem Leitungssystem 44c angeordnet. Das Ventilelement 74 befindet sich in dem Betriebszustand in einem Schließzustand. Die Steuerfläche 76c und die zweite Steuerfläche 78c sind fluidtechnisch gleichgerichtet. Die zweite Steuerfläche 78c verschließt in einem Betriebszustand die Regeleinheit 14c. Dazu schließt die Steuerfläche 78c mit einer Wandung 79c der Regeleinheit 14c ab. Die Wandung 79c und/oder die Steuerfläche 78c weisen nicht zueinander korrespondierende Konturen auf. Im vorliegenden Fall weist die Wandung 79c eine parabelförmige Kontur auf. Die Kontur der Wandung 79c ist relativ zur Steuerfläche 78c konvex. Die Steuerfläche 78c weist eine gerade Kontur auf. Alternativ könnte auch die Steuerfläche eine konvexe und/oder parabelförmige Kontur aufweisen, wobei insbesondere die Wandung eine gerade Kontur aufweist. Die Kontur, insbesondere die jeweilige Kontur der Steuerfläche 78c im Zusammenspiel mit der Kontur der Wandung 79c, bestimmt dabei wesentlich den Zusammenhang zwischen dem einstellbaren Wert einer weiteren Strömungskenngröße und dem daraus resultierenden, also insbesondere vorbestimmten Wert der Strömungskenngröße. Unterschreitet der Wert der Strömungskenngröße im Leitungssystem 44c einen minimalen, für die Regeleinheit 14c vorbestimmten Wert der Strömungskenngröße, so verschließt die Steuerfläche 78c im Zusammenspiel mit der Wandung 79c die Regeleinheit 14c. ist ein Wert der Strömungskenngröße größer als ein minimaler, für die Regeleinheit 14c vorbestimmter Wert, so öffnet sich diese wieder.

Ferner weist die Regeleinheit 14c einen Steuerauslass 77c auf. Der Steuerauslass 77c verengt abschnittsweise das Leitungssystem 44c. in dem Betriebszustand öffnet oder schließt sich das Ventilelement 74c der Regeleinheit 14c zusätzlich in Abhängigkeit von einem auf die Steuerfläche 76c wirkenden Druck, welcher sich durch einen Staudruck an dem Steuerauslass 77c aufbaut. Ist eine aus dem Staudruck abgeleitete, auf die Steuerfläche 76c wirkende Kraft größer als eine von einem Federelement 82c der Regeleinheit 14c auf das Ventilelement 74c wirkende Federkraft, so verschließt sich dieses.

Durch das Zusammenspiel der Steuerflächen 78c und 76c kann somit die Regeleinheit 14c, durch Einstellung des variablen Werts der weiteren Strömungskenngröße durch die Steuereinheit 18c wenigstens bereichsweise den Wert der Kenngröße, welcher von der Regeleinheit 14c einregelbar ist, vorbestimmen.

Figur 8 zeigt ein weiteres schematisches Diagramm mit idealisierten Kennlinien des Leitungssystems 44c der alternativen Ausgestaltung der Getränkemaschinenvorrichtung aus Figur 8. Das Diagramm weist eine Abszissenachse 88c auf. Auf der Abszissenachse 88c ist die Strömungskenngröße aufgetragen. Ferner zeigt das Diagramm eine Ordinatenachse 90c. Auf der Ordinatenachse 90c ist die weitere Strömungskenngröße aufgetragen. Ferner zeigt das Diagramm eine Lastkennlinie 92c des Leitungssystems 44c. Im Fall der Lastkennlinie 92c ist die Regeleinheit 14c deaktiviert. Somit bestimmt die Regeleinheit 14c bei Einstellung des variablen Werts der weiteren Kenngröße durch die Steuereinheit 18c nicht den Wert der Strömungskenngröße, welcher von der Regeleinheit 14c einregelbar ist, vor.

Ferner zeigt das Diagramm eine Lastkennlinie 92'c des Leitungssystems 44c. Im Falle der Lastkennlinie 92'c ist die Regeleinheit 14c aktiviert. Somit bestimmt die Regeleinheit 14c bei Einstellung des variablen Werts der weiteren Strömungskenngröße durch die Steuereinheit 18c zumindest bereichsweise den Wert der Strömungskenngröße, welcher von der Regeleinheit 14c einregelbar ist, vor.

Der Wertebereich, in welchem die Regeleinheit 14c bei Einstellung des variablen Werts der weiteren Strömungskenngröße durch die Steuereinheit 18c zumindest den Wert der Strömungskenngröße, welcher von der Regeleinheit 14c einregelbar ist, vorbestimmt, weist an dessen Rändern Umkehrpunkte auf. Die Lastkennlinie 92'c ist in dem Wertebereich zumindest im Wesentlichen linear. Ferner weist der Wertebereich eine zumindest im Wesentlichen konstante Steigung auf. In dem Wertebereich ist die Steigung der Lastkennlinie 92'c negativ.

In Figur 9 ist eine Schnittdarstellung einer Regeleinheit 14d in einem weiteren Ausführungsbeispiel der erfindungsgemäßen Getränkemaschinenvorrichtung dargestellt. Das vorliegende Ausführungsbeispiel unterscheidet sich im Wesentlichen von den vorherigen Ausführungsbeispielen durch eine Ausgestaltung der Regeleinheit 14d der Getränkemaschinenvorrichtung sowie insbesondere durch eine durch diese Ausgestaltung veränderte Regelung durch die Regeleinheit 14d und/oder Ansteuerung durch eine nicht näher dargestellte Steuereinheit der Getränkemaschinenvorrichtung.

Die Getränkemaschinenvorrichtung weist ein nicht näher dargestelltes Leitungssystem auf. Das Leitungssystem ist zur Leitung einer nicht näher dargestellten Getränkeflüssigkeit durch die Getränkemaschinenvorrichtung vorgesehen.

Die Getränkemaschinenvorrichtung weist die Regeleinheit 14d auf. Die Regeleinheit 14d ist in zumindest einem Betriebszustand zumindest teilweise von der Getränkeflüssigkeit durchflossen. Die Regeleinheit 14d bildet zumindest teilweise das Leitungssystem aus. Die Regeleinheit 14d ist fluidtechnisch einer nicht näher dargestellten Zubereitungseinheit der Getränkemaschinenvorrichtung nachgeschaltet. Die Regeleinheit 14d ist dazu vorgesehen, eine Strömungskenngröße wenigstens bereichsweise auf einen zumindest im Wesentlichen konstanten Wert einzuregeln. Die Regeleinheit 14d ist im vorliegenden Fall als ein Druck-Durchfluss-Regler 25d ausgebildet.

Die Regeleinheit 14d weist ein Ventilelement 74d auf, das eine Anströmfläche 158d aufweist. In dem Betriebszustand öffnet oder schließt die Regeleinheit 14d in Abhängigkeit von einem auf die Anströmfläche 158d wirkenden Druck das Leitungssystem durch Bewegung des Ventilelements 74d. Im vorliegenden Ausführungsbeispiel ist der auf die Anströmfläche 158d wirkende Druck ein Druck der Getränkeflüssigkeit. Die Anströmfläche 158d ist innerhalb des Leitungssystems angeordnet. In jedem Betriebszustand ist die Anströmfläche 158d in Kontakt zu der in dem Leitungssystem befindlichen Getränkeflüssigkeit angeordnet. Die Anströmfläche 158d verschließt in einem Betriebszustand die Regeleinheit 14d. Dazu schließt die Anströmfläche 158d mit einer Wandung 79d der Regeleinheit 14d ab. Die Wandung 79d und die Anströmfläche 158d weisen zueinander korrespondierende Konturen auf. Unterschreitet der Wert der Strömungskenngröße im Leitungssystem einen minimalen, für die Regeleinheit 14d vorbestimmten Wert der Strömungskenngröße, so verschließt die Anströmfläche 158d im Zusammenspiel mit der Wandung 79d die Regeleinheit 14d. ist ein Wert der Strömungskenngröße größer als ein minimaler, für die Regeleinheit 14d vorbestimmter Wert, so öffnet sich diese wieder. Des Weiteren weist die Regeleinheit 14d einen Gehäuseanschlag 154d auf. Ferner weist die Regeleinheit 14d einen Steuerauslass 77d auf. Der Steuerauslass 77d verengt abschnittsweise das Leitungssystem.

Die Regeleinheit 14d weist ein Federelement 82d auf. Das Federelement 82d ist als eine Druckfeder ausgebildet. In dem Betriebszustand ist das Federelement 82d in Kontakt mit dem Ventilelement 74d angeordnet. Das Federelement 82d beaufschlagt das Ventilelement 74d in dem Betriebszustand mit einer Federkraft. In dem Betriebszustand wirkt das Federelement 82d einer durch die Getränkeflüssigkeit an der Anströmfläche 158d erzeugten Kraft teilweise entgegen. Die Regeleinheit 14d weist ein weiteres Federelement 114d auf. Das weitere Federelement 114d ist als eine Druckfeder ausgebildet. Grundsätzlich wäre auch denkbar, dass das weitere Federelement 114d als eine Zugfeder ausgebildet ist.

Die Regeleinheit 14d weist ein Entlastungselement 116d auf. Das Entlastungselement 116d ist innerhalb des Leitungssystems angeordnet. Das Entlastungselement 116d weist im vorliegenden Fall einen Durchlass 118d auf. Mittels des Durchlasses 118d ist die Getränkeflüssigkeit durch das Entlastungselement 116d förderbar. Der Durchlass 118d verengt abschnittsweise das Leitungssystem. Der Durchlass 118d ist dazu vorgesehen, die Strömungskenngröße zu regulieren. Der Durchlass 118d ist dazu vorgesehen, den Durchfluss zu steuern oder zu regeln. Das Entlastungselement 116d weist eine weitere Anströmfläche 128d auf. In dem Betriebszustand ist das Entlastungselement 116d in Abhängigkeit von einem auf die weitere Anströmfläche 128d wirkenden Druck verschiebbar. Im vorliegenden Ausführungsbeispiel ist der auf die weitere Anströmfläche 128d wirkende Druck ein Druck der Getränkeflüssigkeit. Die weitere Anströmfläche 128d ist innerhalb des Leitungssystems angeordnet. Das Entlastungselement 116d ist verschiebbar zwischen dem Federelement 82d und dem weiteren Federelement 114d angeordnet. Das Entlastungselement 116d ist in zumindest einem Betriebszustand dazu vorgesehen, das Federelement 82d zu entlasten. Das Federelement 82d ist gegen das Ventilelement 74d und gegen das Entlastungselement 116d abgestützt. Durch eine Verschiebung des Entlastungselements 116d ist die wirkende Federkraft des Federelements 82d veränderbar. Das weitere Federelement 114d ist gegen die Wandung 79d und gegen das Entlastungselement 116d abgestützt. Das Entlastungselement 116d ist in zumindest einem Betriebszustand dazu vorgesehen, durch einen Druck, insbesondere einen auf eine Oberfläche, insbesondere die weitere Anströmfläche 128d, des Entlastungselements 116d wirkenden Staudruck, entgegen einer Federkraft des weiteren Federelements 114d verschoben zu werden. Das Entlastungselement 116d ist gegen die Wandung 79d fluidtechnisch abgedichtet. Dazu weist die Regeleinheit 14d eine Dichtung 138d auf. Die Federkraft des Federelements 82d ist im vorliegenden Fall kleiner als die Federkraft des weiteren Federelements 114d. Das Entlastungselement 116d ist in einem Betriebszustand, in dem das Ventilelement 74d geschlossen ist, maximal in Richtung des Ventilelements 74d verschoben. Das Entlastungselement 116d kontaktiert in dem Betriebszustand, in dem das Ventilelement 74d geschlossen ist, den Gehäuseanschlag 154d. Das Entlastungselement 116d kontaktiert in dem Betriebszustand, in dem das Ventilelement 74d geschlossen ist, den Gehäuseanschlag 154d mit der weiteren Anströmfläche 128d. Der Gehäuseanschlag 154d ist dazu vorgesehen, eine Verschiebung des Entlastungselements 116d in eine Richtung zu begrenzen. Kontaktiert das Entlastungselement 116d den Gehäuseanschlag 154d, kann durch die Regeleinheit 14d vorteilhaft ein hoher Brühdruck bereitgestellt werden. Das Entlastungselement 116d weist einen Anschlag 156d auf. Der Anschlag 156d ist im vorliegenden Fall als ein hohlzylinderförmiger Fortsatz des Entlastungselements 116d ausgebildet. Der Anschlag 156d ist dazu vorgesehen, eine Verschiebung des Entlastungselements 116d in eine der Richtung entgegengesetzte Richtung zu begrenzen. Der Anschlag 156d des Entlastungselements 116d ist dazu vorgesehen, in einem Betriebszustand die Wandung 79d zu kontaktieren. Kontaktiert der Anschlag 156d die Wandung 79d, kann durch die Regeleinheit 14d vorteilhaft ein geringer Brühdruck bereitgestellt werden.

Figur 10 zeigt ein schematisches Diagramm mit Verläufen zweier Strömungskenngrößen und zweier entsprechenden weiteren Strömungskenngrößen der alternativen Ausgestaltung der Getränkemaschinenvorrichtung aus Figur 9. Das Diagramm weist eine Abszissenachse 140d auf. Auf der Abszissenachse 140d ist eine Zeit in Sekunden aufgetragen. Ferner zeigt das Diagramm zwei Ordinatenachsen 142d, 144d. Auf einer ersten Ordinatenachse 142d ist die Strömungskenngröße in bar aufgetragen. Auf einer zweiten Ordinatenachse 144d ist die weitere Strömungskenngröße in ml/min aufgetragen. Ferner zeigt das Diagramm einen Verlauf 146d der Strömungskenngröße für eine Getränkevariante. Die Getränkevariante ist im vorliegenden Fall als ein Espresso ausgebildet. Des Weiteren zeigt das Diagramm einen Verlauf 148d der weiteren Strömungskenngröße für die Getränkevariante. Ferner zeigt das Diagramm einen Verlauf 150d der Strömungskenngröße für eine weitere Getränkevariante. Die weitere Getränkevariante ist als ein Kaffee Crema ausgebildet. Des Weiteren zeigt das Diagramm einen Verlauf 152d der weiteren Strömungskenngröße für die weitere Getränkevariante.

Der weiteren Strömungskenngröße ist zumindest eine bestimmte Strömungskenngröße zugeordnet, wobei die Strömungskenngröße über die Steuereinheit, insbesondere über einen Phasenanschnitt, einstellbar ist. Der Phasenanschnitt erfolgt mittels einer Phasenanschnittsteuerung. Einem Durchfluss ist ein Druck zugeordnet, wobei der Druck über den Phasenanschnitt einstellbar ist.

Der zumindest im Wesentlichen konstante Wert der Strömungskenngröße der Getränkevariante ist größer als ein zumindest im Wesentlichen konstanter Wert einer Strömungskenngröße der weiteren Getränkevariante, wobei ein Wert der weiteren Strömungskenngröße der Getränkevariante kleiner als ein Wert der weiteren Strömungskenngröße der weiteren Getränkevariante ist. Ein zumindest im Wesentlichen konstanter Wert des Drucks der Getränkevariante, insbesondere des Espressos, ist größer als ein zumindest im Wesentlichen konstanter Wert des Drucks der weiteren Getränkevariante, insbesondere des Kaffee Crema. Ein Wert des Durchflusses der Getränkevariante, insbesondere des Espressos, ist kleiner als ein Wert des Durchflusses der weiteren Getränkevariante, insbesondere des Kaffee Crema. Der Espresso kann vorteilhaft mit einem niedrigen Durchfluss und einem hohen Druck hergestellt werden. Der Kaffee Crema kann vorteilhaft mit einem niedrigen Druck und einem hohen Durchfluss hergestellt werden. In der in Figur 9 dargestellten Position des Entlastungselements 116d kann vorteilhaft ein hoher Brühdruck erreicht werden. Ist das Entlastungselement 116d von der in Figur 9 dargestellten Position maximal in Richtung des weiteren Federelements 114d verschoben, kann vorteilhaft ein geringer Brühdruck erreicht werden.

## Patentansprüche

1. Getränkemaschinenvorrichtung, insbesondere Kaffeemaschinenvorrichtung, mit zumindest einer Getränkepumpe (10; 10b), vorzugsweise einer Schwingankerpumpe, welche zur Förderung einer Getränkeflüssigkeit (12; 12b) vorgesehen ist, mit zumindest einer Regeleinheit (14; 14b; 14c; 14d), welche dazu vorgesehen ist, zumindest eine Strömungskenngröße der Getränkeflüssigkeit (12; 12b) zumindest im Wesentlichen auf wenigstens einen vorbestimmten Wert einzuregeln,
**gekennzeichnet durch**
eine Steuereinheit (18; 18b), welche dazu vorgesehen ist, zur variablen Einstellung einer weiteren Strömungskenngröße der Getränkeflüssigkeit (12; 12b) die Getränkepumpe (10; 10b) anzusteuern,
und wobei
die Steuereinheit (18; 18b) zur Ansteuerung der Getränkepumpe (10; 10b) eine Phasenanschnittsteuerung vorsieht, wobei die Steuereinheit (18; 18b) zum Ansteuern und Einstellen der weiteren Strömungskenngröße die leistungsabhängige Pumpenkennlinie der Getränkepumpe (10; 10b) verwendet, wobei die Strömungskenngrößen Kenngrößen sind, welche ein Strömungsverhalten der Getränkeflüssigkeit innerhalb der Getränkemaschinenvorrichtung beschreiben.

2. Getränkemaschinenvorrichtung nach Anspruch 1, **dadurch gekennzeichnet, dass** die Regeleinheit (14; 14b; 14d) dazu vorgesehen ist, die Strömungskenngröße wenigstens bereichsweise auf einen zumindest im Wesentlichen konstanten Wert einzuregeln.

3. Getränkemaschinenvorrichtung nach Anspruch 1 oder 2, **dadurch gekennzeichnet, dass** die Steuereinheit (18; 18b) dazu vorgesehen ist, die weitere Strömungskenngröße wenigstens bereichsweise unabhängig von der Strömungskenngröße einzustellen.

4. Getränkemaschinenvorrichtung nach einem der vorhergehenden Ansprüche,
**dadurch gekennzeichnet, dass** die Regeleinheit (14c; 14d) dazu vorgesehen ist, bei Einstellung des variablen Werts der weiteren Strömungskenngröße durch die Steuereinheit (18; 18b) wenigstens bereichsweise den Wert der Strömungskenngröße, welcher von der Regeleinheit (14c; 14d) einregelbar ist, vorzubestimmen.

5. Getränkemaschinenvorrichtung nach einem der vorhergehenden Ansprüche,
**dadurch gekennzeichnet, dass** zumindest eine der Strömungskenngrößen einem Durchfluss der Getränkeflüssigkeit (12; 12b) entspricht.

6. Getränkemaschinenvorrichtung nach einem der vorhergehenden Ansprüche,
**dadurch gekennzeichnet, dass** zumindest eine der Strömungskenngrößen einem Druck der Getränkeflüssigkeit (12; 12b) entspricht.

7. Getränkemaschinenvorrichtung nach einem der vorhergehenden Ansprüche,
**dadurch gekennzeichnet, dass** die Steuereinheit (18; 18b) und/oder die Regeleinheit (14; 14b; 14c; 14d) dazu vorgesehen sind, die Regelung der Strömungskenngröße auf den zumindest vorbestimmten Wert und/oder die Ansteuerung der Getränkepumpe (10; 10b) zur variablen Einstellung der weiteren Strömungskenngröße, abhängig von einer zu bereitenden Getränkevariante durchzuführen.

8. Getränkemaschinenvorrichtung nach einem der vorhergehenden Ansprüche,
**dadurch gekennzeichnet, dass** die Steuereinheit (18) dazu vorgesehen ist, während eines Getränkezubereitungsvorgangs die weitere Strömungskenngröße zu variieren.

9. Getränkemaschinenvorrichtung nach einem der vorhergehenden Ansprüche,
**dadurch gekennzeichnet, dass** die Regeleinheit (14; 14b; 14c; 14d) in zumindest einem Betriebszustand zumindest teilweise von der Getränkeflüssigkeit (12) durchflossen ist.

10. Getränkemaschinenvorrichtung nach einem der vorhergehenden Ansprüche,
**dadurch gekennzeichnet, dass** die Regeleinheit (14; 14d) zur Festlegung zumindest eines Wertebereichs, in welchem die Strömungskenngröße zumindest im Wesentlichen konstant ist, einstellbar ist.

11. Getränkemaschinenvorrichtung nach einem der vorhergehenden Ansprüche,
**dadurch gekennzeichnet, dass** die Regeleinheit (14; 14c; 14d) zumindest teilweise einen Druckregler (24; 26c) ausbildet.

12. Getränkemaschinenvorrichtung nach einem der vorhergehenden Ansprüche,
**dadurch gekennzeichnet, dass** die Regeleinheit (14b, 14c; 14d) zumindest teilweise einen Durchflussregler (26b; 26c) ausbildet.

13. Getränkemaschinenvorrichtung nach einem der vorhergehenden Ansprüche,
**dadurch gekennzeichnet, dass** der Wertebereich der Strömungskenngröße sich von wenigstens 0,5 bar bis höchstens 25 bar erstreckt.

14. Getränkemaschinenvorrichtung nach einem der vorhergehenden Ansprüche,
**dadurch gekennzeichnet, dass** der Wertebereich der weiteren Strömungskenngröße sich von wenigstens 5 ml/min bis höchstens 1000 ml/min erstreckt.

15. Getränkemaschinenvorrichtung nach einem der vorhergehenden Ansprüche,
**gekennzeichnet durch** eine Zubereitungseinheit (30; 30a), welche fluidtechnisch zumindest teilweise zwischen der Getränkepumpe (10; 10b) und der Regeleinheit (14; 14b; 14c; 14d) angeordnet ist.

16. Getränkemaschinenvorrichtung nach einem der vorhergehenden Ansprüche,
**dadurch gekennzeichnet, dass** der weiteren Strömungskenngröße zumindest eine bestimmte Strömungskenngröße zugeordnet ist, wobei die Strömungskenngröße über die Steuereinheit, insbesondere über einen Phasenanschnitt, einstellbar ist.

17. Getränkemaschinenvorrichtung nach einem der vorhergehenden Ansprüche,
**dadurch gekennzeichnet, dass** der zumindest im Wesentlichen konstante Wert der Strömungskenngröße einer Getränkevariante größer als ein zumindest im Wesentlichen konstanter Wert einer Strömungskenngröße einer weiteren Getränkevariante ist, wobei ein Wert der weiteren Strömungskenngröße der Getränkevariante kleiner als ein Wert der weiteren Strömungskenngröße der weiteren Getränkevariante ist.

18. Getränkemaschinenvorrichtung nach einem der vorhergehenden Ansprüche,
**dadurch gekennzeichnet, dass** die Regeleinheit (14d) ein Federelement (82d), zumindest ein weiteres Federelement (114d) und zumindest ein Entlastungselement (116d) aufweist, wobei das zumindest eine Entlastungselement (116d) verschiebbar zwischen dem Federelement (82d) und dem zumindest einen weiteren Federelement (114d) angeordnet ist.

19. Getränkemaschine (32), insbesondere Kaffeemaschine, mit einer Getränkemaschinenvorrichtung nach einem der vorhergehenden Ansprüche.

20. Verfahren zum Betrieb einer Getränkemaschinenvorrichtung, insbesondere einer Getränkemaschinenvorrichtung nach einem der Ansprüche 1 bis 18, mit zumindest einem Verfahrensschritt, in welchem eine Getränkeflüssigkeit (12; 12b) mittels einer Getränkepumpe (10; 10b), insbesondere einer Schwingankerpumpe, gefördert wird,
wobei zumindest eine Strömungskenngröße auf einen vorbestimmten Wert eingeregelt wird und die Getränkepumpe (10; 10b) zur variablen Einstellung einer weiteren Strömungskenngröße angesteuert wird,
wobei die Strömungskenngrößen Kenngrößen sind, welche ein Strömungsverhalten der Getränkeflüssigkeit innerhalb der Getränkemaschinenvorrichtung beschreiben,
wobei die Getränkepumpe (10; 10b) über eine Phasenanschnittsteuerung angesteuert wird,
und wobei zu der Ansteuerung und Einstellung der weiteren Strömungskenngröße die leistungsabhängige Pumpenkennlinie der Getränkepumpe (10: 10b) verwendet wird.

## Claims

1. Beverage machine device, in particular coffee machine device,
with at least one beverage pump (10; 10b), preferably an oscillating armature pump, which is configured for conveying a beverage liquid (12; 12b),
with at least one regulation unit (14; 14b; 14c; 14d) configured for regulating at least one flow parameter of the beverage liquid (12; 12b) at least substantially to at least one predetermined value,
**characterised by**
a control unit (18; 18b), which is configured to actuate the beverage pump (10; 10b) for a variable adjustment of a further flow parameter of the beverage liquid (12; 12b),
and wherein
the control unit (18; 18b) provides a phase-angle control for the actuation of the beverage pump (10; 10b), the control unit (18; 18b) using the performance-related pump characteristic of the beverage pump (10; 10b) for an actuation and adjustment of the further flow parameter,
wherein the flow parameters are parameters describing a fluid-dynamic behaviour of the beverage liquid within the beverage machine device.

2. Beverage machine device according to claim 1,
**characterised in that** the regulation unit (14; 14b; 14d) is configured for regulating the flow parameter at least section-wise to a value that is at least substantially constant.

3. Beverage machine device according to claim 1 or 2,
**characterised in that** the control unit (18; 18b) is configured for setting the further flow parameter at least section-wise independently from the flow parameter.

4. Beverage machine device according to one of the preceding claims,
**characterised in that** the regulation unit (14c; 14d) is configured, during a setting of the variable value of the further flow parameter by the control unit (18; 18b), to predetermine at least section-wise the value of the flow parameter that can be regulated by the regulation unit (14c; 14d).

5. Beverage machine device according to one of the preceding claims,
**characterised in that** at least one of the flow parameters corresponds to a volumetric flow rate of the beverage liquid (12; 12b).

6. Beverage machine device according to one of the preceding claims,
**characterised in that** at least one of the flow parameters corresponds to a pressure of the beverage liquid (12; 12b).

7. Beverage machine device according to one of the preceding claims,
**characterised in that** the control unit (18a; 18b) and/or the regulation unit (14; 14b; 14c; 14d) are configured to carry out the regulation of the flow parameter to the at least predetermined value and/or the actuation of the beverage pump (10; 10b) for a variable setting of the further flow parameter independently from a beverage variant that is to be prepared.

8. Beverage machine device according to one of the preceding claims,
**characterised in that** the control unit (18) is configured to vary the further flow parameter during a beverage preparation process.

9. Beverage machine device according to one of the preceding claims,
**characterised in that** in at least one operation state the regulation unit (14; 14b; 14c; 14d) is at least partly flown through by the beverage liquid (12).

10. Beverage machine device according to one of the preceding claims,
**characterised in that** the regulation unit (14; 14d) is adjustable for a definition of at least one value range in which the flow parameter is at least substantially constant.

11. Beverage machine device according to one of the preceding claims,
**characterised in that** the regulation unit (14; 14c; 14d) at least partly forms a pressure regulator (24; 26c).

12. Beverage machine device according to one of the preceding claims,
**characterised in that** the regulation unit (14b; 14c; 14d) at least partly forms a flow controller (26b; 26c).

13. Beverage machine device according to one of the preceding claims,
**characterised in that** the value range of the flow parameter extends from at least 0.5 bar to maximally 25 bar.

14. Beverage machine device according to one of the preceding claims,
**characterised in that** the value range of the further flow parameter extends from at least 5 ml/min to maximally 1,000 ml/min.

15. Beverage machine device according to one of the preceding claims,
**characterised by** a preparation unit (30; 30a), which is fluid-dynamically arranged at least partly between the beverage pump (10; 10b) and the regulation unit (14; 14b; 14c; 14d).

16. Beverage machine device according to one of the preceding claims,
**characterised in that** at least one defined flow parameter is assigned to the further flow parameter,
wherein the flow parameter can be set via the control unit, in particular via phase cutting.

17. Beverage machine device according to one of the preceding claims,
**characterised in that** the at least substantially constant value of the flow parameter of a beverage variant is greater than an at least substantially constant value of a flow parameter of a further beverage variant,
wherein a value of the further flow parameter of the beverage variant is smaller than a value of the further flow parameter of the further beverage variant.

18. Beverage machine device according to one of the preceding claims,
**characterised in that** the regulation unit (14d) comprises a spring element (82d), at least one further spring element (114d) and at least one relief element (116d), wherein the at least one relief element (116d) is arranged so as to be displaceable between the spring element (82d) and the at least one further spring element (114d).

19. Beverage machine (32), in particular coffee machine,
with a beverage machine device according to one of the preceding claims.

20. Method for operating a beverage machine device, in particular a beverage machine device according to one of claims 1 to 18,
with at least one method step in which a beverage liquid (12; 12b) is conveyed by means of a beverage pump (10; 10b), in particular an oscillating armature pump, wherein at least one flow parameter is regulated to a predetermined value and the beverage pump (10; 10b) is actuated for a variable adjustment of a further flow parameter,
the flow parameters being parameters describing a fluid-dynamic behaviour of the beverage liquid within the beverage machine device,
wherein the beverage pump (10; 10b) is actuated via phase-angle control, and wherein the performance-related pump characteristic of the beverage pump (10; 10b) is used for the actuation and the adjustment of the further flow parameter.

## Revendications

1. Dispositif de machine à boissons, en particulier dispositif de cafetière,
avec au moins une pompe-boisson (10 ; 10b), de préférence une pompe d'armature oscillante, destinée à transporter un liquide à boisson (12 ; 12b), avec au moins une unité de régulation (14 ; 14b ; 14c ; 14d) destinée à réguler au moins un paramètre d'écoulement du liquide à boisson (12 ; 12b) au moins sensiblement à au moins une valeur prédéterminée,
**caractérisé par**
une unité de commande (18 ; 18b) qui est destinée à actionner la pompe-boisson (10 ; 10b) pour le réglage variable d'un autre paramètre d'écoulement du liquide à boisson (12 ; 12b),
et où
l'unité de commande (18 ; 18b) pourvoie une commande en angle de phase pour l'actionnement de la pompe-boisson (10 ; 10b), l'unité de commande (18 ; 18b) utilisant la caractéristique, dépendante de puissance, de la pompe-boisson (10 ; 10b) pour actionner et régler l'autre paramètre d'écoulement,
où les paramètres d'écoulement sont des paramètres décrivant un comportement d'écoulement du liquide à boisson dans le dispositif de machine à boissons.

2. Dispositif de machine à boissons selon la revendication 1,
**caractérisé en ce que** l'unité de régulation (14 ; 14b ; 14d) est destinée à réguler le paramètre d'écoulement au moins par sections à une valeur au moins sensiblement constante.

3. Dispositif de machine à boissons selon la revendication 1 ou 2,
**caractérisé en ce que** l'unité de commande (18 ; 18b) est destinée à régler l'autre paramètre d'écoulement au moins par sections indépendamment du paramètre d'écoulement.

4. Dispositif de machine à boissons selon l'une des revendications précédentes,
**caractérisé en ce que** l'unité de régulation (14c ; 14d) est destinée, avec un réglage de la valeur variable de l'autre paramètre d'écoulement par l'unité de commande (18 ; 18b), à prédéterminer au moins par sections la valeur du paramètre d'écoulement qui peut être régulée par l'unité de régulation (14c ; 14d).

5. Dispositif de machine à boissons selon l'une des revendications précédentes,
**caractérisé en ce qu'**au moins un des paramètres d'écoulement corresponde à un débit du liquide à boisson (12 ; 12b).

6. Dispositif de machine à boissons selon l'une des revendications précédentes,
**caractérisé en ce qu'**au moins un des paramètres d'écoulement corresponde à une pression du liquide à boisson (12 ; 12b).

7. Dispositif de machine à boissons selon l'une des revendications précédentes,
**caractérisé en ce que** l'unité de commande (18 ; 18b) et/ou l'unité de régulation (14 ; 14b ; 14c ; 14d) sont destinées, pour le réglage variable de l'autre paramètre d'écoulement, à exécuter la régulation du paramètre d'écoulement à la valeur au moins prédéterminée et/ou l'actionnement de la pompe-boisson (10 ; 10b) en fonction d'une variante de boisson qui est à préparer.

8. Dispositif de machine à boissons selon l'une des revendications précédentes,
**caractérisé en ce que** l'unité de commande (18) est destinée à varier l'autre paramètre d'écoulement pendant un procès de préparation de boisson.

9. Dispositif de machine à boissons selon l'une des revendications précédentes,
**caractérisé en ce que** l'unité de régulation (14 ; 14b ; 14c ; 14d) est en au moins un état de fonctionnement au moins partiellement traversée par le liquide à boisson (12).

10. Dispositif de machine à boissons selon l'une des revendications précédentes,
**caractérisé en ce que** l'unité de régulation (14 ; 14d) est réglable pour définir au moins une plage de valeurs dans laquelle le paramètre d'écoulement est au moins sensiblement constant.

11. Dispositif de machine à boissons selon l'une des revendications précédentes,
**caractérisé en ce que** l'unité de régulation (14 ; 14c ; 14d) forme au moins partiellement un régulateur de pression (24 ; 26c).

12. Dispositif de machine à boissons selon l'une des revendications précédentes,
**caractérisé en ce que** l'unité de régulation (14b ; 14c ; 14d) forme au moins partiellement un régulateur de débit (26b ; 26c).

13. Dispositif de machine à boissons selon l'une des revendications précédentes,
**caractérisé en ce que** la plage de valeurs du paramètre d'écoulement s'étend d'au moins 0,5 bar jusqu'à maximalement 25 bar.

14. Dispositif de machine à boissons selon l'une des revendications précédentes,
**caractérisé en ce que** la plage de valeurs de l'autre paramètre d'écoulement s'étend d'au moins 5 ml/min jusqu'à maximalement 1000 ml/min.

15. Dispositif de machine à boissons selon l'une des revendications précédentes,
**caractérisé par** une unité de préparation (30 ; 30a) disposée de manière fluidique au moins partiellement entre la pompe-boisson (10 ; 10b) et l'unité de régulation (14 ; 14b ; 14c ; 14d).

16. Dispositif de machine à boissons selon l'une des revendications précédentes,
**caractérisé en ce qu'**au moins un paramètre d'écoulement défini est alloué à l'autre paramètre d'écoulement,
où le paramètre d'écoulement étant réglable par le biais de l'unité de commande, en particulier par un découpage de phase.

17. Dispositif de machine à boissons selon l'une des revendications précédentes,
**caractérisé en ce que** la valeur au moins sensiblement constante du paramètre d'écoulement d'une variante de boisson est supérieure à une valeur au moins sensiblement constante d'un paramètre d'écoulement d'une autre variante de boisson,
où une valeur de l'autre paramètre d'écoulement de la variante de boisson est inférieure à une valeur de l'autre paramètre d'écoulement de l'autre variante de boisson.

18. Dispositif de machine à boissons selon l'une des revendications précédentes,
**caractérisé en ce que** l'unité de régulation (14d) comprend un élément-ressort (82d), au moins un autre élément-ressort (114d) et au moins un élément de soulagement (116d),
où l'au moins un élément de soulagement (116d) est disposé déplaçablement entre l'élément-ressort (82d) et l'au moins un autre élément-ressort (114d).

19. Machine à boissons (32), en particulier cafetière,
avec un dispositif de machine à boissons selon l'une des revendications précédentes.

20. Procédé de fonctionnement d'un dispositif de machine à boissons, en particulier d'un dispositif de machine à boissons selon l'une des revendications 1 à 18, avec au moins une étape de procédé dans lequel un liquide à boisson (12 ; 12b) est transporté moyennant une pompe-boisson (10 ; 10b), en particulier une pompe à armature oscillante,
où au moins un paramètre d'écoulement est régulé à une valeur prédéterminée et la pompe-boisson (10 ; 10b) est actionnée pour le réglage variable d'un autre paramètre d'écoulement,
les paramètres d'écoulement étant des paramètres décrivant un comportement d'écoulement du liquide à boisson dans le dispositif de machine à boissons, où la pompe-boisson (10 ; 10b) est actionnée par le biais d'une commande en angle de phase et
où la caractéristique, dépendante d'une puissance, de la pompe-boisson (10 ; 10b) est utilisée pour l'actionnement et le réglage de l'autre paramètre d'écoulement.
